# EUROPEAN PATENT SPECIFICATION

(11) **EP 4 123 417 B1**
(45) Date of publication and mention of the grant of the patent: **20.11.2024**
(21) Application number: 21837143.3
(22) Date of filing: 23.06.2021
(51) Int. Cl.: G06F 1/16, G09F 9/30, H04M 1/02

(54) **ELECTRONIC APPARATUS COMPRISING FLEXIBLE DISPLAY**
ELEKTRONISCHE VORRICHTUNG MIT FLEXIBLER ANZEIGE
APPAREIL ÉLECTRONIQUE COMPRENANT UN ÉCRAN SOUPLE

(30) Priority: 10.07.2020 KR 20200085408
(43) Date of publication of application: 25.01.2023
(73) Proprietor: Samsung Electronics Co., Ltd., Suwon-si, Gyeonggi-do 16677 (KR)
(72) Inventor: KIM, Jongkeun, Suwon-si, Gyeonggi-do 16677 (KR); KIM, Jongyoon, Suwon-si, Gyeonggi-do 16677 (KR)
(74) Representative: Gulde & Partner
(86) International application number: PCT/KR2021/007862
(87) International publication number: WO 2022/010137

(56) References cited:
- KR-A- 20150 104 407
- KR-A- 20180 122 210
- KR-A- 20200 058 020
- KR-A- 20200 073 686
- US-A1- 2018 059 740
- US-A1- 2020 103 935
- US-A1- 2020 133 341

## Description

### [Technical Field]

Various embodiments disclosed in herein relate to an electronic device, for example, an electronic device including a display that is flexible enough to be folded.

### [Background Art]

With the development of electronic, information, and communication technologies, various functions are being integrated into one portable communication device or electronic device. For example, a smartphone includes functions of a sound reproduction device, an imaging device, and a digital diary, in addition to a communication function, and further various functions may be implemented in the smartphone through additional installation of applications.

Without being limited to the functions (e.g., applications) or information provided in a portable communication device or an electronic device itself, the user is capable of searching for and selectively acquiring more information by accessing a network. In accessing a network, a direct access method (e.g., wired communication) may provide fast and stable communication establishment, but a utilization area may be limited to a fixed location or a predetermined extent of space. In accessing a network, a wireless communication method has few restrictions on location or space, and the transmission speed and stability are gradually reaching the same level as the direct access method. In the future, it is expected that the wireless communication method will provide faster and more stable communication establishment than the direct access method.

With the widespread use of personal or portable communication devices, such as smartphones, user demands for portability and ease of use are increasing. For example, a touch screen display may provide a virtual keypad that replaces a mechanical input device (e.g., a button input device) while serving as an output device that outputs a screen (e.g., visual information). Accordingly, portable communication devices or electronic devices have come to be capable of providing the same or further improved usability (e.g., a larger screen) while being miniaturized. On the other hand, with the commercialization of flexible, for example, foldable or rollable displays, it is expected that the portability and ease of use of electronic devices will be further improved.

US 2020/103935 A1 discloses a hinge module for a fold-able-type device, wherein when first and second housings are rotated a sliding cover is moved via a four-linkage-mechanism.

US 2018/0059740 A1 discloses a multiaxial hinge suitably used in an electronic device.

KR 2020 0058020 A refers to a display device capable of reducing a width of bezel.

### [Detailed Description of the Invention]

### [Technical Problem]

In implementing the electronic device in a foldable or rollable type, it may be difficult to ensure mechanical stability while enabling the structures of the electronic device to relatively move (e.g., slide, rotate, or pivot) with respect to each other. For example, it may be difficult to ensure a stable operation structure while ensuring or maintaining portability of an electronic device through miniaturization and reduction of weight and thickness.

According to various embodiments disclosed herein, it is possible to provide an electronic device in which different areas of a display are foldable to face away from each other or to face each other.

According to various embodiments disclosed herein, it is possible to provide an electronic device in which structures (e.g., housings) relatively move (e.g., rotate or slide) while a display is foldable.

According to various embodiments disclosed herein, it is possible to provide an electronic device that is capable of stably maintaining the state in which a display is folded or unfolded.

### [Technical Solution]

The invention is defined by the appended claims. The description that follows is subjected to this limitation. Any disclosure lying outside the scope of said claims is only intended for illustrative as well as comparative purposes.

### [Advantageous Effects]

According to various embodiments disclosed herein, in an electronic device in which a display is foldable such that different areas thereof face each other or face away from each other, a hinge module interconnects a plurality of (e.g., a pair of) housings by using hinge arms interlocked with gear shafts, thereby ensuring that the housings are stably pivotable. For example, in an operation of being folded to at least partially face each other or unfolded, the plurality of housings are simultaneously pivotable about the hinge module. In an embodiment, the hinge arms may be bound to the housings by a plurality of pins to maintain a state substantially parallel to one surface of the housings or the flexible display. For example, the pivoting of the housings relative to the hinge arms may be suppressed, and the pivoting of the hinge arms and the pivoting of the housings may substantially match with each other. The pivoting of the plurality of housings may be symmetrically performed about the hinge module, so that a load generated from a folded (bent) or unfolded deformation operation may be uniformly distributed over the entire flexible area of the flexible display. For example, by preventing a load generated in the deformation operation from being concentrated on a specific area, the reliability and/or durability of the flexible display may be secured. In the electronic device according to various embodiments disclosed herein, while the rotation of the housings is stopped at a position at which the housings are unfolded by a predetermined angle (e.g., an angle of 180 degrees), a rotation force (and/or a pivot force) is provided in a direction of causing the housings to pivot beyond the predetermined angle. As a result, the housings are capable of maintaining a stably stationary state at a predetermined angular position.

### [Brief Description of Drawings]

FIG. 1 is a view illustrating the unfolded state of an electronic device according to various embodiments disclosed herein.
FIG. 2 is a view illustrating the folded state of the electronic device according to various embodiments disclosed herein.
FIG. 3 is an exploded perspective view illustrating an electronic device according to various embodiments disclosed herein.
FIG. 4 is a view illustrating a structure in which a first housing and a second housing are connected to each other in an electronic device according to various embodiments disclosed herein.
FIG. 5 is a view illustrating a structure in which a hinge module is disposed in an electronic device according to various embodiments disclosed herein.
FIG. 6 is an exploded perspective view illustrating a hinge module of an electronic device according to various embodiments disclosed herein.
FIG. 7 is a perspective view illustrating an assembled hinge module of an electronic device according to various embodiments disclosed herein.
FIG. 8 is a front view illustrating a hinge module of an electronic device according to various embodiments disclosed herein.
FIG. 9 is a plan view illustrating a hinge module of an electronic device according to various embodiments disclosed herein.
FIG. 10 is a perspective view illustrating a first hinge bracket of an electronic device and/or a hinge module according to various embodiments disclosed herein.
FIG. 11 is a perspective view illustrating a portion of a first rotation bracket of an electronic device and/or a hinge module according to various embodiments disclosed herein.
FIG. 12 is a view illustrating a first hinge arm of an electronic device and/or a hinge module according to various embodiments disclosed herein.
FIG. 13 is a view illustrating a first mounting member of an electronic device and/or a hinge module according to various embodiments disclosed herein.
FIG. 14 is a view illustrating a positional relationship between pivot axes and/or rotation axes of an electronic device and/or a hinge module according to various embodiments disclosed herein.
FIG. 15 is a view illustrating an arrangement structure of cam members in an electronic device and/or a hinge module according to various embodiments disclosed herein.
FIG. 16 is a perspective view illustrating the folding operation of an electronic device and/or a hinge module according to various embodiments disclosed herein.
FIG. 17 is a front view illustrating the folding operation of an electronic device and/or a hinge module according to various embodiments disclosed herein.
FIG. 18 is a perspective view illustrating the folded state of an electronic device and/or a hinge module according to various embodiments disclosed herein.
FIG. 19 is a view illustrating the folded state of an electronic device and/or a hinge module according to various embodiments disclosed herein.
FIG. 20 is a perspective view illustrating the hinge module cut along line "CA" in FIG. 9.
FIG. 21 is a view illustrating the hinge module cut along line "CB" in FIG. 9.
FIG. 22 is a perspective view illustrating the hinge module cut along line "CC" in FIG. 9.
FIG. 23 is a view illustrating the hinge module cut along line "CD" in FIG. 9.
FIG. 24 is a perspective view illustrating the hinge module cut along line "CE" in FIG. 9.
FIG. 25 is an enlarged view illustrating a portion indicated by "S3" in FIG. 24.
FIG. 26 is a perspective view illustrating the hinge module cut along line "CA" of FIG. 9 in the folding operation of the electronic device and/or the hinge module according to various embodiments disclosed herein.
FIG. 27 is a perspective view illustrating the hinge module cut along line "CC" of FIG. 9 in the folding operation of the electronic device and/or the hinge module according to various embodiments disclosed herein.
FIG. 28 is a perspective view illustrating the hinge module cut along line "CA" of FIG. 9 in the folded state of the electronic device and/or the hinge module according to various embodiments disclosed herein.
FIG. 29 is a perspective view illustrating the hinge module cut along line "CC" of FIG. 9 in the folded state of the electronic device and/or the hinge module according to various embodiments disclosed herein.
FIG. 30 is a perspective view illustrating the hinge module cut along line "CD" of FIG. 9 in the folded state of the electronic device and/or the hinge module according to various embodiments disclosed herein.
FIG. 31 is a perspective view illustrating the hinge module cut along line "CE" of FIG. 9 in the folded state of the electronic device and/or the hinge module according to various embodiments disclosed herein.

### [Mode for Carrying out the Invention]

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic", "logic block", "part", or "circuitry". A module may be a single integral component, or a minimum unit or part thereof, adapted to perform one or more functions. For example, according to an embodiment, the module may be implemented in a form of an application-specific integrated circuit (ASIC).

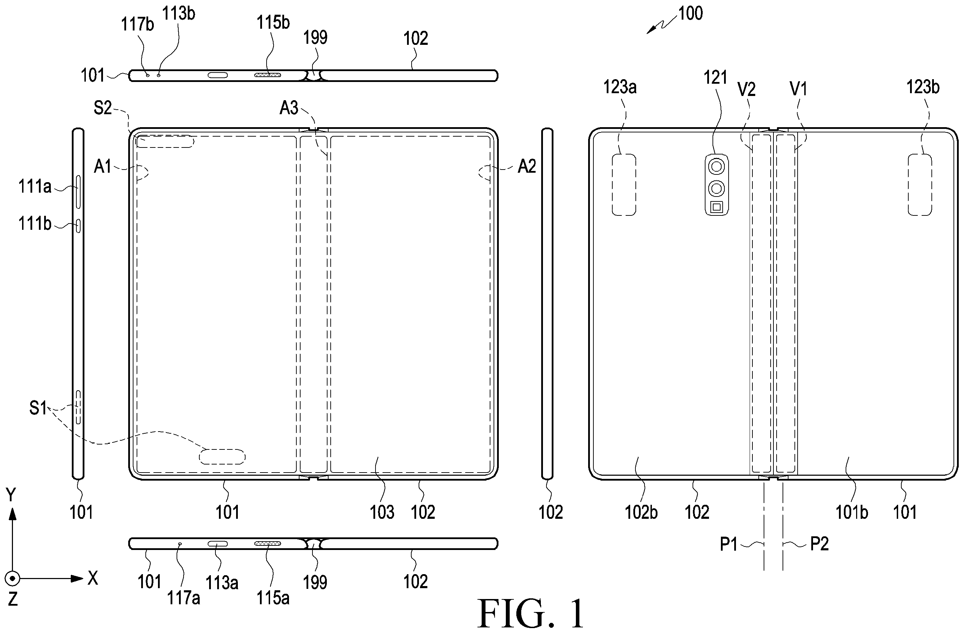

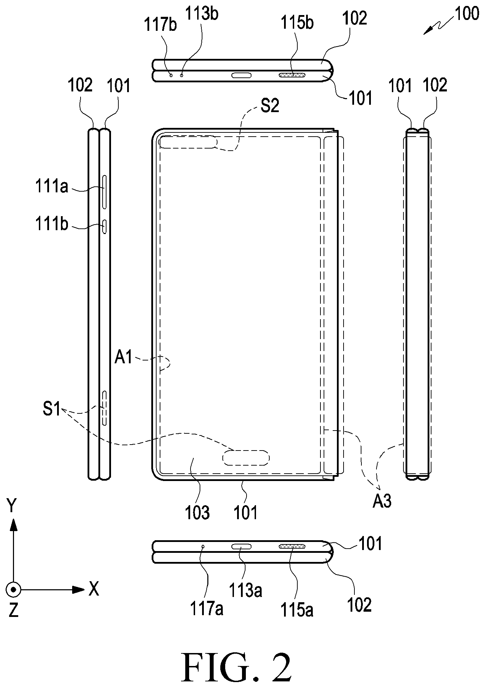

FIG. 1 is a view illustrating the unfolded state of an electronic device 100 according to various embodiments disclosed herein. FIG. 2 is a view illustrating the folded state of the electronic device 100 according to various embodiments disclosed herein.

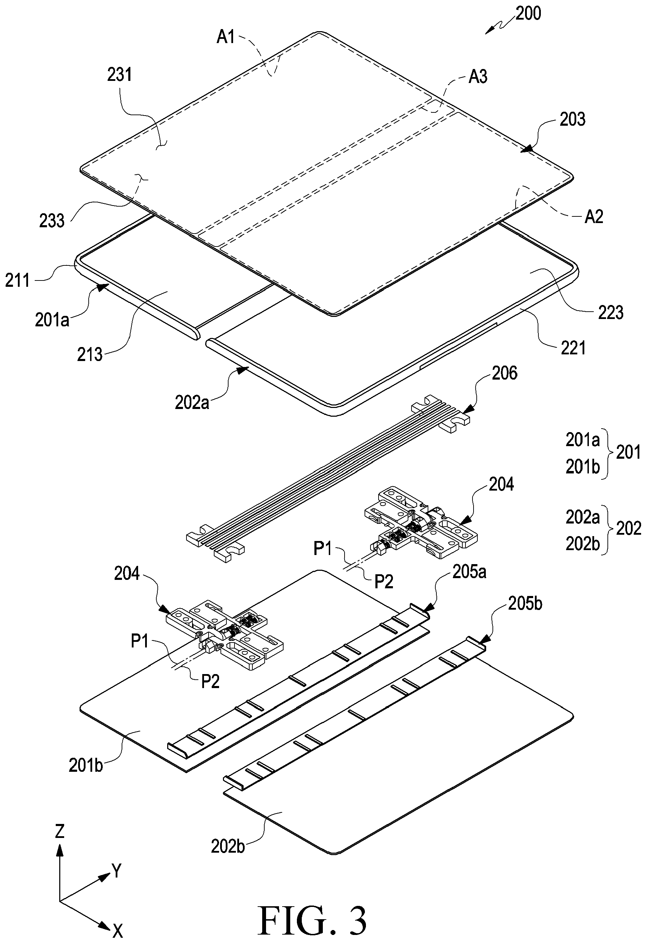

In describing various embodiments disclosed herein, a configuration in which a pair of housings (e.g., a first housing 101 and a second housing 102) are pivotably coupled to each other via a hinge module (e.g., the hinge module 204 in FIG. 3) may be illustrated. However, it is noted that this embodiment does not limit the electronic device 100 according to various embodiments disclosed herein. For example, the electronic device 100 according to various embodiments disclosed herein may include three or more housings, and "a pair of housings" in the embodiments disclosed below may mean "two housings pivotably coupled to each other among the three or more housings".

In the following detailed description, reference may be made to "+X/-X direction", "+Y/-Y direction" or "+Z/-Z direction", and it is noted that the Cartesian coordinate system to be described later is generally described with reference to the width direction X, the length direction Y, or the thickness direction Z of the first housing 101 in FIG. 1 or FIG. 2. For example, the above definition of directions may be variously changed in some embodiments or when the directions are set with reference to another structure of the electronic device 100. In addition, in the following detailed description, the "front surface" or "rear surface" of the electronic device 100 or the housings 101 and 102 may be referred to, in which, irrespective of a relative position (e.g., an unfolded state or a folded state) of the housings 101 and 102, the surface on which the flexible display 103 of FIG. 1 is disposed is defined as the "front surface" of the electronic device 100 (or the housings 101 and 102), and a surface facing away from the surface on which the flexible display 103 is disposed is defined as the "rear surface" of the electronic device 100 (or the housings 101 and 102).

Referring to FIGS. 1 and 2, the electronic device 100 may include a pair of housings 101 and 102, a flexible display 103, and a hinge module (e.g., the hinge modules 204 in FIG. 3) that pivotably couples the housings 101 and 102. The electronic device 100 may further include a hinge cover(s) 199 disposed on the upper end and/or the lower end. The hinge cover(s) 199 may be disposed substantially between the first housing 101 and the second housing 102, and may block the hinge module 204 from being visually exposed to the outside. In another embodiment, the hinge cover(s) 199 may isolate an internal space of the electronic device 100 from an external space. In some embodiments, the hinge cover(s) 199 may be visually exposed to the outside in the unfolded state of the electronic device 100, and may be visually hidden in the state in which the electronic device 100 is folded.

According to various embodiments, as illustrated in FIG. 1, in the unfolded state of the electronic device 100 (e.g., the first housing 101 and the second housing 102), the flexible display 103 may output a screen substantially in one direction (e.g., the +Z direction) through the entire area thereof. As illustrated in FIG. 2, in the folded state of which the electronic device 100, a first area A1 of the flexible display 103 is oriented in the +Z direction, and a second area A2 of the flexible display 103 is oriented in the -Z direction. For example, the flexible display 103 may include areas (e.g., the first area A1 and the second area A2) disposed to face away from each other in the folded state of the electronic device 100. For example, the first housing 101 and the second housing 102 is pivotable between a position in which the first and second housings are unfolded to be arranged side by side and a position in which the first and second housings are folded to face each other. According to an embodiment, the flexible display 103 may include a folding area A3, and in the folded state of the electronic device 100, the folding area A3 may be disposed to be oriented substantially in the +X direction. For example, in the state in which the first housing 101 and the second housing 102 are folded to face each other, the flexible display 103 may be visually exposed to the outside.

According to various embodiments, the first housing 101 and/or the second housing 102 may accommodate the flexible display 103 on the front surfaces thereof, and may include rear plates 101b and 102b (e.g., the first rear plate 201b and the second rear plate 202b in FIG. 3) disposed on the rear surfaces thereof. The electronic device 100 may include a plurality of electrical components disposed in the space between the flexible display 103 and the rear plates 101b and 102b (e.g., a circuit board, various sensor modules, a battery, and a sound input/output module, a camera module, a haptic module, an antenna, and/or a connection terminal. The first housing 101 may be coupled to the hinge module 204 to be pivotable about a first pivot axis P1, and the second housing 102 may be coupled to the hinge module 204 to be pivotable about a second pivot axis P2. In some embodiments, the first housing 101 and the second housing 102 may be disposed to be substantially symmetrical to each other about the hinge module 204. In another embodiment, when the first housing 101 pivots about the hinge module 102, the second housing 102 may pivot in a direction reverse to that of the first housing 101, whereby the electronic device may be folded or unfolded.

According to various embodiments, the flexible display 103 may include a first area A1 disposed on one surface of the first housing 101, a folding area A3 disposed to correspond to the hinge module 204, and/or a second area A2 disposed on one surface of the second housing 102. For example, the flexible display 103 may be disposed or extend from the one surface of the first housing 101 to the one surface of the second housing 102 across the area in which the hinge module 204 is disposed. In practice, the first area A1 may be fixed to the first housing 101, the second area A2 may be fixed to the second housing 102, and/or the folding area A3 may be supported by a multi-bar assembly (e.g., the multi-bar assembly 206 in FIG. 3). For example, the multi-bar assembly 206 may be disposed between the first housing 101 and the second housing 102 on the front surface of the electronic device 100 to support the flexible display 103 (e.g., the folding area A3). In an embodiment, the flexible display 103 may output a screen through an area substantially corresponding to the total area of the front surface of the electronic device 100.

According to various embodiments, the width measured from the side surface of the first housing 101 to the side surface of the second housing 102 in the X-axis direction in the unfolded state across the position at which the hinge module 204 is disposed may be substantially the same on the front surface of the electronic device 100 (e.g., the flexible display 103) and the rear surface of the electronic device 100. The width measured from the side surface of the first housing 101 to the side surface of the second housing 102 in the X-axis direction in the folded state across the position at which the hinge module 203 is disposed may be smaller on the rear surface of the electronic device 100 than on the front surface of the electronic device 100 (e.g., the flexible display 103). The first area A1 and the second area A2 of the flexible display 103 are fixed to the first housing 101 and the second housing 102 and the width measured in the X-axis direction is be substantially unchangeable in the flexible display 103. Thus, the width measured in the X-axis direction on the rear surface of the electronic device 100 is changeable. For example, the change in width measured in the X-axis direction on the rear surface of the electronic device 100 may be implemented by allowing a partial area of the rear surface of the electronic device 100 (e.g., the area indicated by "V1" and/or the area indicated by "V2") to contract or expand. In another embodiment, the change in width measured in the X-axis direction on the rear surface of the electronic device 100 may be implemented through the sliding of the first housing 101 and/or the second housing 102 relative to the hinge module 204. In another embodiment, when the first housing 101 and/or the second housing 102 slide with respect to the hinge module 204 and the area indicated by "V1" and/or the area indicated by "V2" contract or expand on the rear surface of the electronic device 100 to correspond to the sliding of the first housing 101 and/or the second housing 102, the width measured in the X-axis direction is changeable.

According to various embodiments, the change in the length of the rear surface of the electronic device 100 according to the unfolding or folding operation may vary depending on the distance between the first pivot axis P1 and the second pivot axis P2 and/or the relative positions of the first pivot axis P1 and the second pivot axis P2 relative to the flexible display 103. In some embodiments, the change in the length of the rear surface of the electronic device 100 according to the unfolding or folding operation may be proportional to the distance between the flexible display 103 and the rear surface of the electronic device 100. For example, as the thickness of the electronic device 100 measured in the Z direction increases, the change in the length of the rear surface of the electronic device 100 according to the unfolding or folding operation may increase.

According to various embodiments, the electronic device 100 (e.g., the first housing 101 and/or the second housing 102) may include one or more sensor areas S1 and S2 each of which is provided with at least one sensor module. For example, the electronic device 100 may include a first sensor area S1 provided on the front or side surface of the first housing 101 and/or a second sensor area S2 provided on the front surface of the first housing 101. In the first sensor area S1, for example, a fingerprint recognition sensor may be disposed. The fingerprint recognition sensor may include, for example, an optical fingerprint recognition sensor or an ultrasonic fingerprint recognition sensor, and may be disposed on the side surface of the first housing 101 (or the second housing 102) or inside the flexible display 103. The electronic device 100 may include a sensor module provided in the second sensor area S2, for example, at least one of a camera module, a proximity sensor, an illuminance sensor, an iris recognition sensor, an ultrasonic sensor, or an indicator. In the second sensor area S2, the sensor module(s) may be disposed inside the flexible display 103.

According to various embodiments, the electronic device 100 may include a notch portion protruding from the second sensor area S2 to the first area A1 of the flexible display 103. The notch portion may be a structure constituting the first housing 101 (or the second housing 102), and at least some of the sensor modules may be disposed in the notch portion. The notch portion may have a polygonal shape, a circular shape, or an elliptical shape. In another embodiment, in the second sensor area S2, the flexible display 103 may include a transparent area that allows external light to be incident therein. For example, among the sensor modules, an optical sensor, such as a camera module or a proximity sensor, may be disposed to correspond to the transparent area of the flexible display 103. The electronic device 100 (e.g., the sensor areas S1 and S2 or the sensor module) according to various embodiments disclosed herein is not limited to the above-described configuration. Depending on functions provided in the electronic device 100 or functions of respective sensor modules mounted in the electronic device 100, the electronic device 100 may further include an additional sensor area or an additional sensor module. In some embodiments, the electronic device 100 may not include some of the above-mentioned sensor modules.

According to various embodiments, the electronic device 100 may include a camera module 121 disposed on the rear surface thereof (e.g., the rear surface of the second housing 102). In some embodiments, the camera module 121 may be interpreted as one of sensor modules, and may include a plurality of cameras, at least one infrared projector, at least one infrared receiver, or a flash. The user may photograph a subject by using the camera module 121 provided on the rear surface of the electronic device 100 (e.g., the second housing 102). In an embodiment, the camera module 121 may be disposed at another position (e.g., a position indicated by reference numeral "123a" or "123b"), and the electronic device 100 may further include an additional camera module or sensor module at a position different from the positions indicated in FIG. 1.

According to various embodiments, the electronic device 100 may include one or more key input devices 111a and 111b disposed on the side surface of the first housing 101 (and/or the second housing 102). The key input devices 111a and 111b may include, for example, a volume control key 111a and/or a power key 111b, and the illustrated key input devices 111a and 11b may be omitted or an additional key input device may be provided in some embodiments. In some embodiments, the electronic device 100 may further include a soft key provided through the flexible display 103.

According to various embodiments, the electronic device 100 may include one or more connector holes 113a and 113b disposed in a side surface (e.g., the side surface, the upper end surface, and/or the lower end surface of the first housing 101 and/or the second housing 102). The connector holes 113a and 113b may include, for example, a first connector hole 113a for connecting a charging/data cable, and a second connector hole 113b for connecting a sound device (e.g., an earphone). In some embodiments, the data cable may refer to a cable provided to the sound device. For example, the second connector hole 113b may be omitted from the electronic device 100, and the electronic device 100 may be connected to the sound device via the first connector hole 113a. In another embodiment, the electronic device 100 may not include the connector holes 113a and 113b. For example, the electronic device 100 may include functions such as wireless charging, Bluetooth communication, wireless fidelity (Wi-Fi) direct, or infrared data association (IrDA) so as to be connected to another electronic device or an additional device, such as an earphone, in a wireless manner.

According to various embodiments, the electronic device 100 may include a plurality of sound output holes 115a and 115b and a plurality of sound input holes 117a and 117b. In the illustrated embodiment, the sound output holes 115a and 115b may be disposed at the upper end and the lower end of the first housing 101 (and/or the second housing 102), respectively. In another embodiment, the sound output holes 115a and 115b may be disposed in the side surface of the first housing 101 and the side surface of the second housing 102, respectively. The sound input holes 117a and 117b may be disposed at the upper and lower ends of the electronic device 100 (e.g., the first housing 101), respectively. The electronic device 100 may perform, in a voice call or sound recording mode, functions, such as sound beam forming, active noise canceling (ANC), echo canceling (EC), noise suppression (NS), and/or feedforward (FF), by acquiring external sound through the plurality of sound input holes 117a and 117b. In some embodiments, a sound input hole (not illustrated) may be further provided in the rear surface of the first housing 101 (and/or the second housing 102). The electronic device 100 may acquire, in a photographing mode, external sound through the sound input hole disposed in the rear surface of the first housing 101. As the number and oriented directions of the sound input holes 117a and 117b increase, the electronic device 100 is capable of providing improved performances in terms of the sound beam forming function, the active noise canceling (ANC) function, the echo canceling (EC) function, the noise suppression (NS) function, and/or feedforward (FF) function.

According to various embodiments, in the unfolded state, the first housing 101 and the second housing 102 may be disposed to form a predetermined angle (e.g., 180 degrees) with respect to each other. When the electronic device 100 is unfolded to a predetermined angle, the flexible display 103 may output a screen in the +Z direction through substantially the entire area. In some embodiments, the first housing 101 and the second housing 102 may be unfolded in an inclined form between the folded position facing each other and a predetermined angular position. In the state of being unfolded in the inclined form, the first area A1 and the second area A2 of the flexible display 103 may output screens in different directions. For example, when unfolded in the inclined form, the electronic device 100 may provide a screen to two users who sit facing each other. When the electronic device 100 outputs a screen in the state of being unfolded in the inclined form, the screen output from the first area A1 and the screen output from the second area A2 may be the same as or different from each other.

According to various embodiments, in the folded state, the flexible display 103 may be substantially visually exposed to the outside. For example, the electronic device 100 may output a screen by using the first area A1, the second area A2, and/or the folding area A3. In some embodiments, in the standby mode, the electronic device 100 may deactivate the screen of the flexible display 103 and may activate a partial area according to predetermined setting. For example, in the standby mode, the electronic device 100 may at least partially activate the first area A1 to output daily information, such as time or weather. According to another embodiment, in the standby mode, the electronic device 100 may activate at least one of the first area A1, the second area A2, and/or the folding area A3 so as to provide visual information about the operating state or display notification information, such as messages or news.

According to various embodiments, the radius of curvature of the folding area A3 of the flexible display 103 may vary while the electronic device 100 is being folded or unfolded. For example, as the electronic device 100 is gradually unfolded from the folded state, the radius of curvature of the folding area A3 may gradually increase. In the folding or unfolding operation, the electronic device 100 may adjust a screen output through the folding area A3. For example, by adjusting the aspect ratio of the screen in the folding area A3 depending on the change in the radius of curvature, the electronic device 100 may compensate for the distortion of the output screen due to the deformation of the folding area A3.

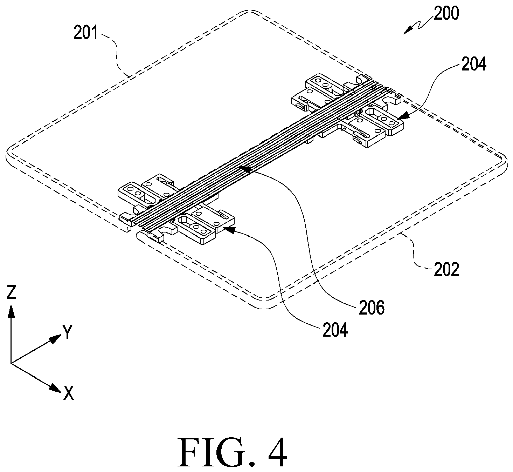

FIG. 3 is an exploded perspective view illustrating an electronic device 200 (e.g., the electronic device 100 in FIG. 1 or FIG. 2) according to various embodiments disclosed herein. FIG. 4 is a view illustrating a structure in which a first housing 101 and a second housing 102 are connected to each other in the electronic device 200 according to various embodiments disclosed herein.

Referring to FIGS. 3 and 4, the electronic device 200 (e.g., the electronic device 100 of FIG. 1 or FIG. 2) may include a first housing 201 (e.g., the first housing 101 in FIG. 1 or FIG. 2), a second housing 202 (e.g., the second housing 102 of FIG. 1 or FIG. 2) pivotably connected to the first housing 201, at least one hinge module 204 pivotably coupling the first housing 201 and the second housing 202 to each other, and/or a flexible display 203 (e.g., the flexible display 103 of FIG. 1 or FIG. 2). The flexible display 203 may be disposed to extend from one surface (e.g., the front surface) of the first housing 201 to one surface (e.g., the front surface) of the second housing 202 across the area in which the hinge module 204 is disposed.

According to various embodiments, the first housing 201 may include a first housing member 201a and a first rear plate 201b coupled to the first housing member 201a. The second housing 202 may include a second housing member 202a and a second rear plate 202b coupled to the second housing member 202a. The first housing 201 and the second housing 202 may have substantially the same structure, and may be partially different from each other depending on electrical components disposed on respective housings. For example, when the camera module 121 of FIG. 1 is disposed in one of the first housing 201 and the second housing 202, the shapes of the first housing 201 and the second housing 202 (e.g., the first rear plate 201b and the second rear plate 202b) or the mechanical structures of the first housing member 201a and the second housing member 202a may be slightly different from each other. The difference between the first housing 201 and the second housing 202 may vary depending on an actually manufactured product.

According to various embodiments, the first housing member 201a substantially configures an external appearance of the electronic device 200 (e.g., the first housing 201), and may include a first side bezel structure 211 and a first support plate 213. The first side bezel structure 211 may have a frame shape that defines a side surface (e.g., the left side surface in FIG. 1), the upper end surface, and/or the lower end surface of the first housing 101, and may be open in a direction adjacent to the second housing 202. According to an embodiment, the first side bezel structure 211 may include a metal and/or a polymer, and may be electrically connected to a processor or a communication module of the electronic device 200 in some embodiments. For example, the first side bezel structure 211 may function as an antenna of the electronic device 200 by at least partially including a metal and/or an electrically conductive material. In some embodiments, the first side bezel structure 211 may provide a decorative effect in the external appearance of the electronic device 200 or provide an electrically insulating structure by including various coating layers.

According to various embodiments, the first support plate 213 may be disposed in the space between the flexible display 203 and the first rear plate 201b and may be connected to the first side bezel structure 211. In some embodiments, the first support plate 213 may be integrated with the first side bezel structure 211, and may include the same material as the first side bezel structure 211, for example, a metal and/or a polymer. In an embodiment, the first support plate 213 may provide an electromagnetic shielding structure inside the electronic device 200 by including a metal and/or a conductive material. In another embodiment, since the first support plate 213 may function as a ground conductor providing a reference potential inside the electronic device 200 by including a metal and/or a conductive material. In some embodiments, a flexible display 103 (e.g., the first area A1) may be positioned on the outer surface of the first support plate 213.

According to various embodiments, the first rear plate 201b may be made of, for example, coated or colored glass, ceramic, a polymer, a metal (e.g., aluminum, stainless steel (STS), or magnesium), or a combination of at least two of above-mentioned materials. In some embodiments, the first rear plate 201b may be substantially integrated with the first housing member 201a (e.g., the first side bezel structure 211). In an embodiment, at least a portion of the first rear plate 201b may include a curved area. For example, an edge portion of the first rear plate 201b adjacent to the first side bezel structure 211 may include a portion that is bent towards the front surface of the electronic device 200 (e.g., the surface on which the flexible display 203 is disposed) to extend seamlessly. In another embodiment, the first rear plate 201b may be disposed to be inclined with respect to the first area A1 of the flexible display 103. For example, when the edge of the first rear plate 201b adjacent to the second housing 202 is located at a first height from the first area A1 of the flexible display 203, the end of the first rear plate 201b in the -X direction may be located at a second height lower than the first height.

According to various embodiments, the space between the first support plate 213 and the first rear plate 201b may be at least partially surrounded by the first side bezel structure 211. Although not illustrated, in the electronic device 200, various electric components, such as a printed circuit board, a battery, a haptic module, a camera module, a sensor module(s) and/or a connection terminal may be accommodated in the space between the first support plate 213 and the first rear plate 201b. For example, the first support plate 213 may be used as a structure that prevents other electrical components of the electronic device 200 from coming into contact with the flexible display 203. Some of the electrical components accommodated in the electronic device 200, for example, a camera module (e.g., the camera module 121 in FIG. 1), may be partially exposed to the external space. Here, the description "exposed to the external space" may mean including a component that is isolated from the external space but is visually exposed and/or a component that is exposed to be directly touchable by a user. On the printed circuit board, a processor, a memory, and/or an interface may be located.

The processor may include at least one of, for example, a central processing unit, an application processor, a graphics processing unit, an image signal processor, a sensor hub processor, or a communication processor. The battery is a device for supplying power to at least one component of the electronic device 200, and may include, for example, a non-rechargeable primary battery, a rechargeable secondary battery, or a fuel cell. At least a portion of the battery may be disposed, for example, between the first support plate and the first rear plate to be substantially flush with the printed circuit board. The battery may be integrally disposed inside the electronic device 200, or may be disposed to be detachably disposed on the electronic device 200.

According to various embodiments, an additional support plate and/or an additional antenna (not illustrated) may be provided in the space between the first support plate 213 and the first rear plate 201b. The additional support plate may improve the mechanical rigidity of the electronic device 200, and may provide an electromagnetic shielding structure between electrical components inside the electronic device 200. The antenna may be disposed between the first support plate 213 (and/or an additional support plate (not illustrated)) and the first rear plate 201b. The antenna may perform short-range communication with an external device or wirelessly transmitting and receiving power required for charging by including, for example, a near field communication (NFC) antenna, a wireless charging antenna, and/or a magnetic secure transmission (MST) antenna. In another embodiment, the antenna structure may be constituted with a part of the first side bezel structure 211 and/or a part of the first support plate 213 or a combination thereof.

According to various embodiments, the second housing 202 may include a second housing member 202a (e.g., the second side bezel structure 221 and a second support plate 223) and a second rear plate 202b, and may have a structure similar to the structure of the first housing 201. Therefore, a detailed description thereof will be omitted. In some embodiments, as described above, the electrical components disposed in the first housing 201 and/or the second housing 202, such as the key input devices 111a and 111b of FIG. 1, the sensor areas S1 and S2, and/or the camera modules 121 may be different from each other. Thus, the second housing 202 may be partially different from the first housing 201 in shape or structure.

According to various embodiments, the hinge module 204 may rotatably couple the second housing 202 to the first housing 201. According to an embodiment, the first housing 201 may be coupled to the hinge module 204 to be pivotable about the first pivot axis P1, and the second housing 202 may be coupled to the hinge module 204 to be pivotable about the second pivot axis P2. For example, the first housing 201 and the second housing 202 may be folded by pivoting in the opposite directions with respect to each other in the unfolded state. In the folded state, the first housing 201 and the second housing 202 may pivot in opposite directions with respect to each other to be unfold to a predetermined angle. Here, the "predetermined angle" may mean an angle of 180 degrees.

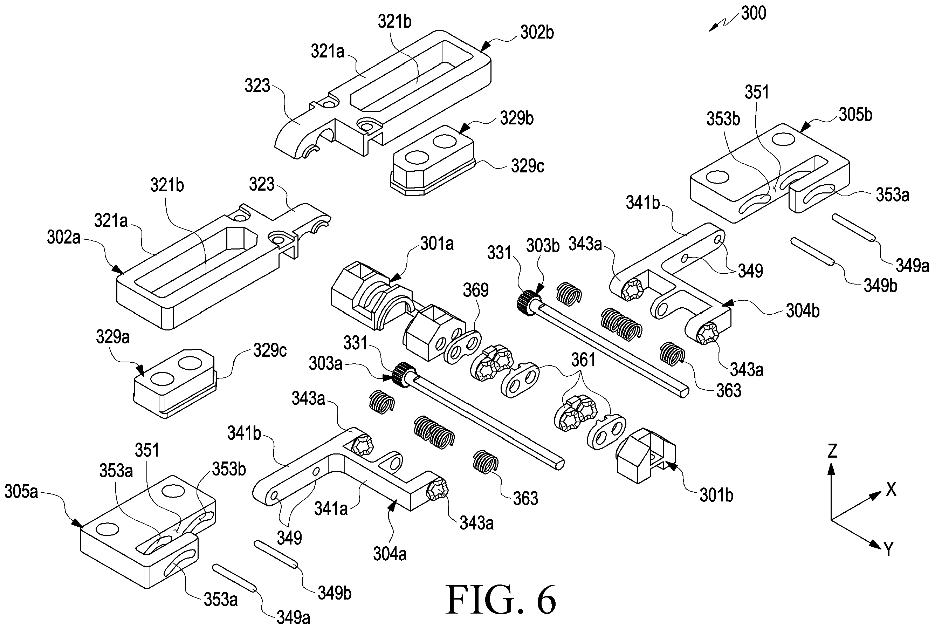

According to various embodiments, the second pivot axis P2 may be disposed parallel to the first pivot axis P1 at a predetermined distance from the first pivot axis P1. In another embodiment, the second pivot axis P2 may coincide with the first pivot axis P1. In some embodiments, the hinge module 204 may interlock the pivoting of the second housing 202 with the pivoting of the first housing 201. For example, when the first housing 201 pivots in a first direction about the first pivot axis P1 (e.g., clockwise when viewed from the state illustrated in FIG. 3), the hinge module 204 may cause the second housing 202 to pivot in a second direction opposite to the first direction (e.g., counterclockwise when viewed in the state illustrated in FIG. 3). According to an embodiment, the hinge module 204 may provide a frictional force when the first housing 201 and/or the second housing 202 pivot. For example, when a user applies an external force to a certain extent, the hinge module 204 may allow the first housing 201 and/or the second housing 202 to pivot, and when the external force is not applied, the hinge module 204 may maintain the first housing 201 and/or the second housing 202 in a stationary state. In another embodiment, the hinge module 204 may maintain the first housing 201 and/or the second housing 202 in a stationary state at a predetermined angular position (e.g., a 0-degree angular position (the folded position), a 180-degree angular position (the unfolded position), and/or a position unfolded in an inclined form at an angle of about 120 degrees to 160 degrees) by using a cam structure. The cam structure of the hinge module 204 will be described in more detail with reference to cam members 343a and 361 of FIG. 6.

According to various embodiments, the flexible display 103 may include a display panel 231 and a display protection layer 233. The display panel 231 may include a light-emitting layer disposed between transparent substrates, and the transparent substrates may include electric circuits such as a touch sensor. For example, the display panel 231 may be made of, for example, an organic-light emitting diode (OLED) or a micro LED to output visual information, and to detect a user's direct touch on the display panel 231 or a user's motion performed within a predetermined distance from the display panel 231. The display protection layer 233 may attach the display panel 231 to the first housing 201 and/or the second housing 202, and may be made of an elastic material so as to be used as a buffer material between the display panel 231 and a mechanical structure (e.g., the first housing 201 and/or the second housing 202).

According to various embodiments, the flexible display 203 may include a first area A1 located on the first housing 201, a second area A2 located on the second housing 202, and a folding area A3 interconnecting the first area A1 and the second area A2. The folding area A3 may be disposed to substantially correspond to the area in which the hinge module 204 is disposed, and may be deformed into a flat shape or a curved shape while the electronic device 200 (e.g., the electronic device 100 in FIG. 1 or FIG. 2) is being folded or unfolded. In the unfolded state of the electronic device 200, the flexible display 203 may output a screen in one direction by using substantially the entire area. In the folded state of the electronic device 200, the flexible display 203 may output screens in different directions by using the first area A1 and the second area A2.

According to various embodiments, the electronic device 200 may further include a first slide plate 205a and a second slide plate 205b. The first slide plate 205a may be located on the first housing member 201a (e.g., the first support plate 213), and a portion of the hinge module 204 may be slidably coupled between the first support plate 213 and the first slide plate 205a. The second slide plate 205b may be located on the second housing member 201a (e.g., the second support plate 223), and a portion of the hinge module 204 may be slidably coupled between the second support plate 223 and the second slide plate 205b. For example, the first slide plate 205a and the second slide plate 205b couple the first housing 201 and/or the second housing 202 to the hinge module 204 to guide or support the sliding of the first housing 201 and/or the second housing 202. According to an embodiment, the first slide plate 205a and/or the second slide plate 205b may not be included in the electronic device 200.

According to various embodiments, the electronic device 200 (e.g., the electronic device 100 in FIGS. 1 and/or 2) may further include a multi-bar assembly 206. The multi-bar assembly 206 may be disposed to correspond to the area in which the hinge module 204 is disposed, and may connect the first support plate 213 and the second support plate 223 to each other. For example, the multi-bar assembly 206 may be disposed to support the folding area A3 of the flexible display 203. In an embodiment, the multi-bar assembly 206 may include a plurality of (e.g., five) bars or rods extending in one direction. The bars or rods of the multi-bar assembly 206 may have a circular, oval, or polygonal cross section, and are disposed parallel to the length direction Y of the electronic device 200, for example, the first pivot axis P1 and/or the second pivot axis P2. In an embodiment, the plurality of bars or rods may be arranged in the width direction of the electronic device 200 (e.g., the X-axis direction) to be pivotably connected to other adjacent bars or rods. Since the bars or rods pivot with respect to other adjacent bars or rods, the multi-bar assembly 206 may be deformed into a flat shape and/or a curved shape. For example, when the electronic device 200 is folded or unfolded, the multi-bar assembly 206 is capable of supporting the folding area A3 of the flexible display 203 while being deformed to correspond to the folding area A3 of the flexible display 203. In the unfolded state of the electronic device 200, when there is a contact of an external object or a user contact on the folding area A3, the multi-bar assembly 206 is capable of supporting the folding area A3 to suppress the deformation of the folding area A3.

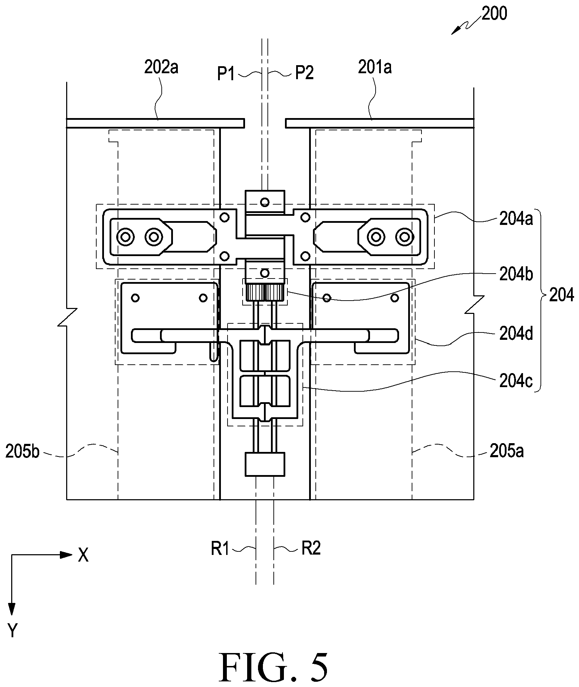

FIG. 5 is a view illustrating a structure in which the hinge module 204 is disposed in the electronic device 200 (e.g., the electronic device 100 in FIG. 1 and/or FIG. 2) according to various embodiments disclosed herein.

Further referring to FIG. 5 together with FIGS. 1 to 4, the hinge module 204 may include a first rotation part 204a, an interlocking part 204b, a resistance part 204c, and/or a second rotation part 204d. The first rotation part 204a is a part that substantially implements or guides the rotation operation of the first housing 101 and/or the second housing 202, wherein the first pivot axis P1 and/or the second pivot axis P2 may be set by the structure of the first rotation part 204a. The interlocking part 204b may interlock the first housing 201 (e.g., the first housing member 201a) and the second housing 202 (e.g., the second housing member 202a) with each other by using a structure in which a plurality of (e.g., one pair or two pairs of) gears (e.g., the spur gears 331 in FIG. 6) are sequentially engaged with each other. For example, a first gear among the gears of the interlocking part 204b may rotate according to the pivoting of the first housing 201, and a second gear among the gears of the interlocking part 204b may rotate in a direction different from that of the first gear (e.g., a reverse direction) according to the pivoting of the second housing 202. For example, the first gear and the second gear may be spur gears, and may be engaged with each other to interlock the pivoting of the first housing 201 and the pivoting of the second housing 202 with each other. In an embodiment, the rotation axis of the first gear (e.g., the first rotation axis R1) and the rotation axis of the second gear (e.g., the second rotation axis R2) may be disposed in parallel with the first pivot axis P1 and/or the second pivot axis P2 at a position spaced apart from the first pivot axis P1 and/or the second pivot axis P2.

According to various embodiments, another pair of gears may be further disposed between the first gear and the second gear, and the first gear and the second gear may be interlocked by the another pair of gears to rotate in opposite directions with respect to each other. In an embodiment, the interlocking part 204b may be included in the first rotation part 204a, and in a structure integrated into the first rotation part 204a, the interlocking part 204a may include an internal gear. In another embodiment, the interlocking part 204a may be included in the resistance part 204c to be described later.

According to various embodiments, the resistance part 204c may include a structure that is fixed in the hinge module 204 and a structure that moves (e.g., rotates) according the pivoting of the first housing 201 and/or the second housing 202, and may generate a frictional force between the fixed structure and the moving structure. For example, when a user applies an external force to a certain extent, the hinge module 204 may allow the first housing 201 and/or the second housing 202 to pivot, and when the external force is not applied, the hinge module 204 may maintain the first housing 201 and/or the second housing 202 in a stationary state by using the resistance part 204c. In another embodiment, the hinge module 204 may maintain the first housing 201 and/or the second housing 202 in a stationary state at a predetermined angular position by utilizing a cam structure provided in the resistance part 204c. In another embodiment, when the hinge module 204 has a structure to which the first housing 101 and/or the second housing 102 are slidably coupled, the resistance part 204c may be included in the slide structure. The resistance part 204c integrated into the slide structure may allow the sliding of the first housing 201 and/or the second housing 202 relative to the hinge module 204 when a user applies a certain amount of external force. When no external force is applied, the sliding of the first housing 201 and/or the second housing 202 relative to the hinge module 204 may be restricted. Since the sliding of the first housing 201 and/or the second housing 202 relative to the hinge module 204 is substantially caused due to the pivoting of the first housing 201 and/or the second housing 202, the resistance part 204c integrated into the slide structure may limit the pivoting of the first housing 201 and/or the second housing 202.

According to various embodiments, the second rotation part 204d may implement or guide the rotation operation of the first housing 201 and/or the second housing 202 together with the first rotation part 204a. In an embodiment, the second rotation part 204d may strengthen the coupling between the hinge module 204 and the first housing 201 and/or the second housing 202. For example, the second rotation part 204d may be connected to the resistance part 204c, for example, the moving (e.g., rotating) structure of the resistance part 204c to pivot together with the first housing 201 and/or the second housing 202.

According to various embodiments, the second rotation part 204d may be bound to the first housing 201 at two or more points at different distances from the first pivot axis P1 (or the first rotation axis R1), and may be bound to the second housing 202 at two or more points at different distances from the second pivot axis P2 (or the second rotation axis R2). For example, it is possible to suppress the occurrence of a relative angular displacement between the second rotation part 204d and the first housing 201 and/or between the second rotation part 204d and the second housing 202. As a result, the second rotation part 204d may pivot substantially together with the first housing 201 and/or the second housing 202 without relative angular displacement, and may provide a stable binding structure between the hinge module 204 and the first housing 201 and/or the second housing 202.

According to various embodiments, the first rotation part 204a and the second rotation part 204d may be at least partially located between the first support plate 213 and the first slide plate 205a and/or between the second support plate 223 and the second slide plate 205b. For example, a surface contact structure is provided between rotation parts (e.g., the first rotation part 204a and/or the second rotation part 204b) and housings (e.g., the first housing 201 and/or the second housing 202), so that the operation of the second rotation part 204d may substantially coincide with the pivot operation of the first housing 201 and/or the second housing 202.

In the following detailed description, if necessary, reference may be made to the electronic devices 100 and 200 of FIGS. 1 to 4 and/or the hinge module 204 of FIG. 5. In describing the following embodiments, the components, which are the same as those of the preceding embodiments or can be easily understood through the preceding embodiments, may be denoted by the same reference numerals or the reference numerals thereof may be omitted, and the detailed descriptions thereof may also be omitted.

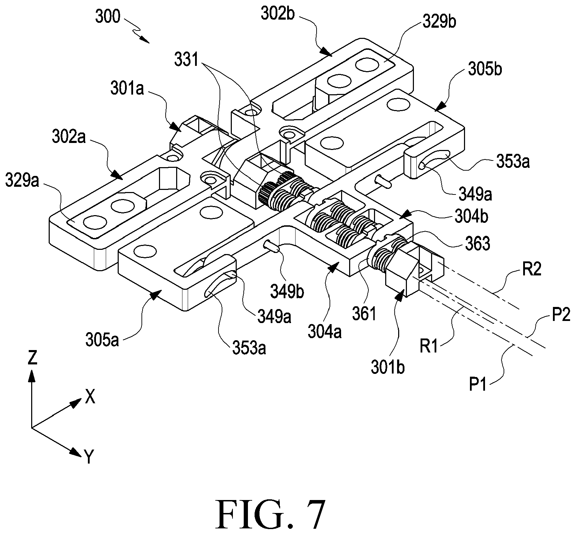

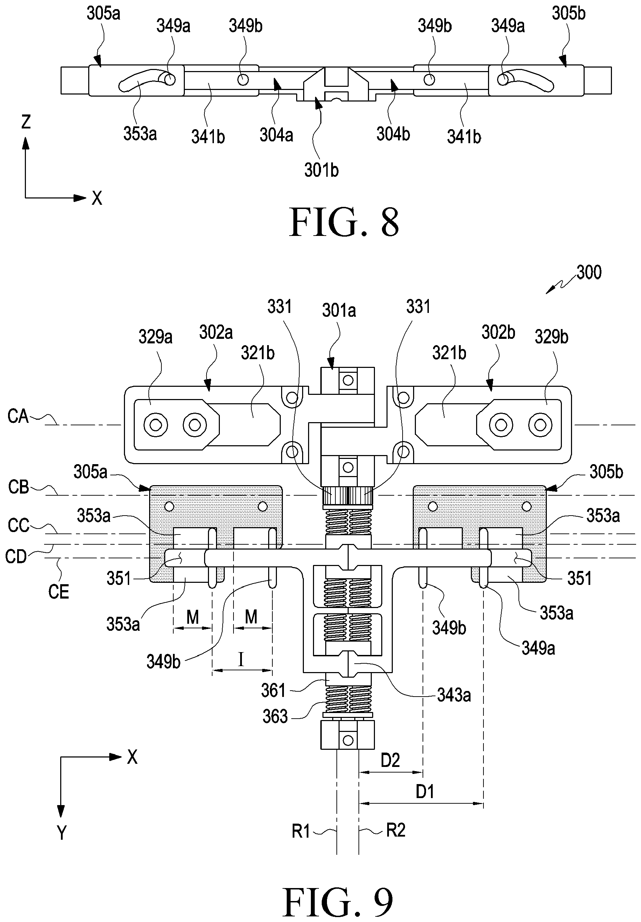

FIG. 6 is an exploded view illustrating a hinge module 300 (e.g., the hinge module 204 of FIG. 3) for an electronic device (e.g., the electronic device 200 of FIG. 3) according to various embodiments disclosed herein. FIG. 7 is a perspective view illustrating the hinge module 300 of the electronic device 200 according to various embodiments disclosed herein in an assembled state. FIG. 8 is a front view illustrating the hinge module 300 of the electronic device 200 according to various embodiments disclosed herein. FIG. 9 is a plan view illustrating the hinge module 300 of the electronic device 200 according to various embodiments disclosed herein.

Referring to FIGS. 6 to 9, the hinge module 300 may include a hinge bracket (e.g., a first hinge bracket 301a and a second hinge bracket 301b), a rotation bracket (e.g., a first rotation bracket 302a and a second rotation bracket 302b), a gear shaft (e.g., a first gear shaft 303a and a second gear shaft 303b), and/or a hinge arm (e.g., a first hinge arm 304a and a second hinge arm 304b). In a structure slidably coupled to a housing (e.g., the first housing 201 and the second housing 202 in FIG. 3) of the electronic device 200, the hinge module 300 may further include a slide member (e.g., a first slide member 329a and a second slide member 329b) and/or a mounting member (e.g., a first mounting member 305a and a second mounting member 305b). In some embodiments, the slide member 329a or 329b is slidably coupled to the rotation bracket 302a or 302b while being located in the housing 201 or 202 of the electronic device 200, and the mounting member 305a or 305b may be slidably coupled to the hinge arm 304a or 304b while being located in the housing 201 or 202 of the electronic device 200. In an embodiment, the slide member 329a or 329b may include a slide rib 329c to be coupled with the rotation bracket 302a or 302b to be in line contact or plane contact with the same, and the mounting member 305a or 305b may be slidably bound to the hinge arm 304a or 304b by a slide pin 349a or 349b. In some embodiments, a plurality of slide pins 349a and 349b may be provided to bind the mounting member 305a or 305b to the hinge arm 304a or 304b at two or more different points. In another embodiment, the hinge module 300 may further include a first cam member 343a provided on the hinge arm 304a or 304b and a second cam member 361 and/or at least one elastic member 363 disposed on the gear shaft 303a or 303b, and when the electronic device 200 is unfolded or folded, the first cam member 343a may generate a frictional force while being in slide contact with the second cam member 361.

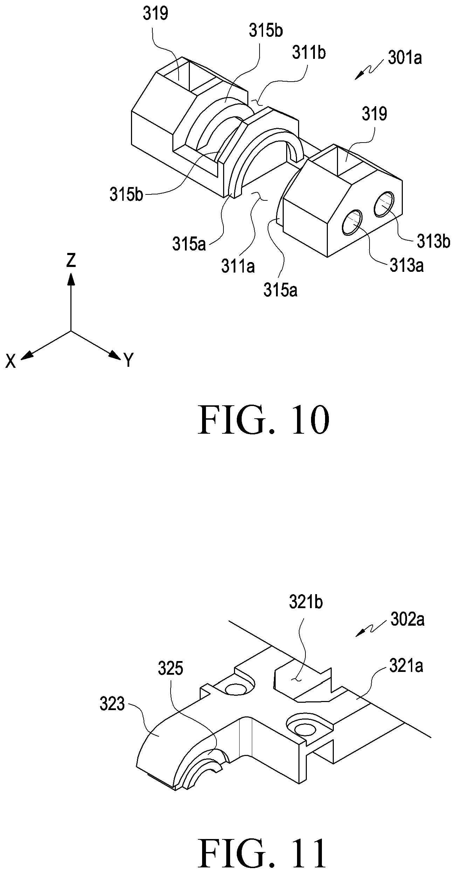

According to various embodiments, the hinge bracket may include a first hinge bracket 301a and a second hinge bracket 301b. The first hinge bracket 301a may be located on a multi-bar assembly (e.g., the multi-bar assembly 206 in FIG. 3) of the electronic device 200, and the second hinge bracket 301b may be located on the multi-bar assembly 206 at a position spaced apart from the first hinge bracket 301a. For example, at least one of the first hinge bracket 301a and the second hinge bracket 301b may provide means for positioning the hinge module 300 in the multi-bar assembly 206. The structure of the first hinge bracket 301a will be further described with reference to FIG. 10.

FIG. 10 is a perspective view illustrating the first hinge bracket 301a of an electronic device (e.g., the electronic device 200 in FIG. 2) and/or a hinge module (e.g., the hinge module 300 in FIG. 6) according to various embodiments disclosed herein.

Further referring to FIG. 10, the first hinge bracket 301a may provide a first rotation space 311a and a second rotation space 311b separated from each other. The first rotation space 311a may mean, for example, a space in which the first rotation bracket 302a is rotatably accommodated or located, and the second rotation space 311b may mean a space in which the second rotation bracket 302b is rotatably accommodated or located. At least one first rotation rail 315a extending to form a curved trajectory may be provided on the inner wall of the first rotation space 311a. In the illustrated embodiment, a pair of first rotation rails 315a may protrude from the inner wall of the first rotation space 311a in the length direction, for example, the -Y direction and/or the +Y direction. When viewed by projection in the Y-axis direction, the pair of first rotation rails 315a may coincide with each other. In some embodiments, when viewed by projection in the Y-axis direction, the pair of first rotation rails 315a may have different radii of curvature while coinciding with each other at the centers of radii of curvature thereof. The second rotation space 311b may be located on the first hinge bracket 301a in the -Y direction with respect to the first rotation space 311a. At least one second rotation rail 315b extending to form a curved trajectory may be provided on the inner wall of the second rotation space 311b. In the illustrated embodiment, a pair of second rotation rails 315a may protrude from the inner wall of the second rotation space 311b in the length direction, for example, the -Y direction and/or the +Y direction. When viewed by projection in the Y-axis direction, the pair of second rotation rails 315a may coincide with each other. In some embodiments, when viewed by projection in the Y-axis direction, the pair of second rotation rails 315a may have different radii of curvatures while coinciding with each other at the centers of radii of curvatures thereof.

According to various embodiments, the centers of the curved trajectories formed by the first rotation rails 315a and/or the second rotation rails 315b, for example, the centers of the radii of curvatures may be located on the first pivot axis P1 and the second pivot axis P2 in FIG. 3. For example, the positions of the first pivot axis P1 and the second pivot axis P2 may be determined by the centers of the curved trajectories of the first rotation rails 315a and/or the second rotation rails 315b and the radii of curvatures of the first rotation rails 315a and/or the second rotation rails 315b. In an embodiment, when the centers of the radii of curvatures of the first rotation rails 315a and the centers of the radii of curvatures of the second rotation rails 315b coincide with each other when viewed by proj ection in the Y-axis direction, the first pivot axis P1 and the second pivot axis P2 may be the same as each other. In another embodiment, when the centers of the radii of curvatures of the first rotation rails 315a and the centers of the radii of curvatures of the second rotation rails 315b do not coincide with each other when viewed by projection in the Y-axis direction, the second pivot axis P2 may be formed at a position spaced apart from the firs pivot axis P1.

According to various embodiments, the first hinge bracket 301a may include a first shaft hole 313a and a second shaft hole 313b. For example, the first shaft hole 313a and the second shaft hole 313b may be provided side by side on an end face of the first hinge bracket 301a oriented in the +Y direction. In some embodiments, the first hinge bracket 301a may include fastening holes 319 provided on an upper surface, for example, the surface oriented in the +Z direction. The fastening holes 319 may include, for example, threads formed on the inner wall, and may provide means for positioning the first hinge bracket 301a on the multi-bar assembly 206. In some embodiments, the multi-bar assembly 206 may include fastening bosses corresponding to the fastening holes 319.

Referring back to FIGS. 6 to 9, the second hinge bracket 301b is disposed to face the first hinge bracket 301a in the Y-axis direction, and may be located on the multi-bar assembly 206. For example, the second hinge bracket 301b may include mounting means or fixing means similar to the fastening holes 319 of the first hinge bracket 301a. In some embodiments, the second hinge bracket 301b may include shaft holes similar to the first shaft hole 313a and/or the second shaft hole 313b. For example, in the Y-axis direction, the shaft holes provided in the second hinge bracket 301b may be disposed to face the first shaft hole 313a and the second shaft hole 313b, respectively. According to an embodiment, the first hinge bracket 301a and the second hinge bracket 301b may be located on the same one of the plurality of bars or rods included in the multi-bar assembly 206. In some embodiments, the multi-bar assembly 206 may include an odd number of (e.g., 5 or 7) bars or rods, and the first hinge bracket 301a and the second hinge bracket 301b may be mounted on a centrally disposed bar or rod in the X-axis direction.

According to various embodiments, the rotation bracket may include a first rotation bracket 302a and a second rotation bracket 302b. The first rotation bracket 302a and/or the second rotation bracket 302b may include a slide frame 321a coupled to the first housing 201 and/or the second housing 202, and a rotation arm 323 extending from the slide frame 321a. The slide frame 321a may be located in a housing (e.g., the first housing 201 or the second housing 202 in FIG. 3). In the illustrated embodiment, the first housing 201 and/or the second housing 202 may be slidably coupled to the hinge module 300, and the slide frame 321a may be slidably coupled to the first housing 201 or the second housing 202. For example, the slide frame 321a may provide a guide hole 321b extending in the X-axis direction, and the first slide member 329a may be slidably accommodated in the guide hole 321b. The first slide member 329a may be located substantially in the first housing 201, for example, between the first support plate 213 and/or the first slide plate 205a in FIG. 3, and the guide hole 321b may have a polygonal or closed curve shape, and the first slide member 329a may be constrained in the guide hole 321b in a slidable state. In an embodiment, the second slide member 329b may be slidably constrained in the guide hole 321b of the second rotation bracket 302b and may be located in the second housing 202. For example, the second slide member 329b may be located between the second support plate 223 and/or the second slide plate 205b in FIG. 3 and may be slidable in the guide hole 321b of the second rotation bracket 302b.

According to various embodiments, the rotation arm 323 of the first rotation bracket 302a and/or the second rotation bracket 302b may be rotatably coupled to the first hinge bracket 301a. For example, the rotation arm 323 of the first rotation bracket 302a may be rotatably accommodated in the first rotation space 311a, and the rotation arm 323 of the second rotation bracket 302b may be rotatably accommodated in the second rotation space 311b. In the state of being coupled to the first hinge bracket 301a, the first rotation bracket 302a and the second rotation bracket 302b may be disposed on a straight line in the X-axis direction. With respect to the rotation arms 323 of the rotation brackets 302a and 302b will be further described with reference to FIG. 11.

FIG. 11 is a perspective view illustrating a portion of a first rotation bracket 302a (e.g., the first rotation bracket 302a and/or the second rotation bracket 302b in FIG. 6) of an electronic device (e.g., the electronic device 200 in FIG. 3) and/or a hinge module (e.g., the hinge module 300 in FIG. 6) according to various embodiments disclosed herein.

Further referring to FIG. 11 together with FIGS. 6 to 9, the rotation arm 323 may extend from one end of the slide frame 321a and may include at least one rotation groove 325 provided on a surface provided in the -Y direction and/or the +Y direction. The rotation groove 325 may have a shape and a trajectory corresponding to the first rotation rail 315a and/or the second rotation rail 315b. In an embodiment, the first rotation rail 315a and/or the second rotation rail 315b may be accommodated in the rotation groove 325 to slide in the rotation groove 325. The first rotation bracket 302a and/or the second rotation bracket 302b may be coupled to the first hinge bracket 301a substantially by the rotation arm 323 and the first rotation rail 315a and/or the rotation arm 323 and the second rotation rail 315b, and may pivot with respect to the first hinge bracket 301a by being guided by the rotation groove 325, the first rotation rail 315a, and/or the second rotation rail 315b.

Referring back to FIGS. 6 to 9, the first rotation bracket 302a and the second rotation bracket 302b may be pivotably mounted on the first hinge bracket 301a. For example, the first rotation bracket 302a and the second rotation bracket 302b may be coupled to the first hinge bracket 301a to substantially provide the first rotation part 205a in FIG. 5. In an embodiment, the centers of the radii of curvatures of the first rotation rail 315a and the second rotation rail 315b may be different from each other. For example, the pivot axis (e.g., the first pivot axis P1) of the first rotation bracket 302a and the pivot axis (e.g., the second pivot axis P2) of the second rotational bracket 302b may be disposed at positions spaced apart from each other to be parallel to each other. In the state of being assembled to the first housing 201 and/or the second housing 202, the first rotation bracket 302a and the second rotation bracket 302b may rotate in an angular range of about 90 degrees with respect to the first hinge bracket 301a. In an embodiment, the first rotation rail 315a and the second rotation rail 315b may have trajectories in an angular range exceeding 90 degrees, for example, in an angular range of about 100 degrees. For example, in the state of being assembled to the first housing 201 and/or the second housing 202, the first rotation bracket 302a and the second rotation bracket 302b may pivot with respect to the first hinge bracket 301 in a predetermined angular range (an angular range of about 90 degrees) while maintaining the state of being bound to the first hinge bracket 301a.

According to various embodiments, the gear shaft may include a first gear shaft 303a and a second gear shaft 303b rotatably mounted between the first hinge bracket 301a and the second hinge bracket 301b. The first gear shaft 303a may be disposed in parallel to the Y axis, and may be rotatably coupled, at one end, to the first hinge bracket 301a, for example, the first shaft hole 313a, and, at the other end, to the second hinge bracket 301b. The second gear shaft 303b may be disposed in parallel to the Y axis, and may be rotatably coupled, at one end, to the first hinge bracket 301a, for example, the second shaft hole 313b, and, at the other end, to the second hinge bracket 301b.

According to various embodiments, the first gear shaft 303a and the second gear shaft 303b may include gears (e.g., spur gears 331) provided at one end portions thereof, respectively. When the first gear shaft 303a and the second gear shaft 303b are mounted on the hinge brackets 301a and 301b, the spur gears 331 may be engaged with each other. For example, when one of the first gear shaft 303a and the second gear shaft 303b rotates in one direction (e.g., clockwise), the other may rotate in the other direction (e.g., counterclockwise). According to an embodiment, a hinge arm to be described later (e.g., the first hinge arm 304a and the second hinge arm 304b) may be coupled to one of the first gear shaft 303a and the second gear shaft 303b, and as the first housing 201 and the second housing 202 pivot, the gear shafts 303a and 303b may rotate about the rotation axes (e.g., the first rotation axis R1 and the second rotation axis R2), respectively. In some embodiments, when one of the first housing 201 and the second housing 202 pivots, the first gear shaft 303a and the second gear shaft 303b may cause the other housing to pivot by using the spur gears 331. For example, the first gear shaft 303a and the second gear shaft 303b may be rotatably mounted between the first hinge bracket 301a and the second hinge bracket 301b to provide the interlocking part 204b in FIG. 5.

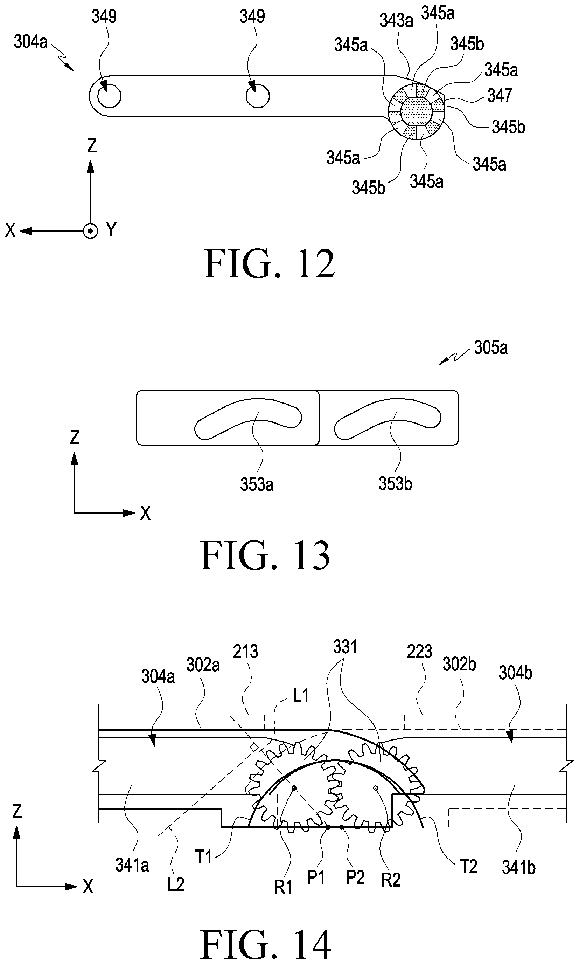

According to various embodiments, the hinge arm may include a first hinge arm 304a coupled with the first gear shaft 303a, and a second hinge arm 304b coupled with the second gear shaft 303b. The configuration or shape of the hinge arms 304a and 304b will be further described with reference to FIG. 12.

FIG. 12 is a perspective view illustrating a first hinge arm 304a of an electronic device (e.g., the electronic device 200 in FIG. 3) and/or a hinge module (e.g., the hinge module 300 in FIG. 6) according to various embodiments disclosed herein.

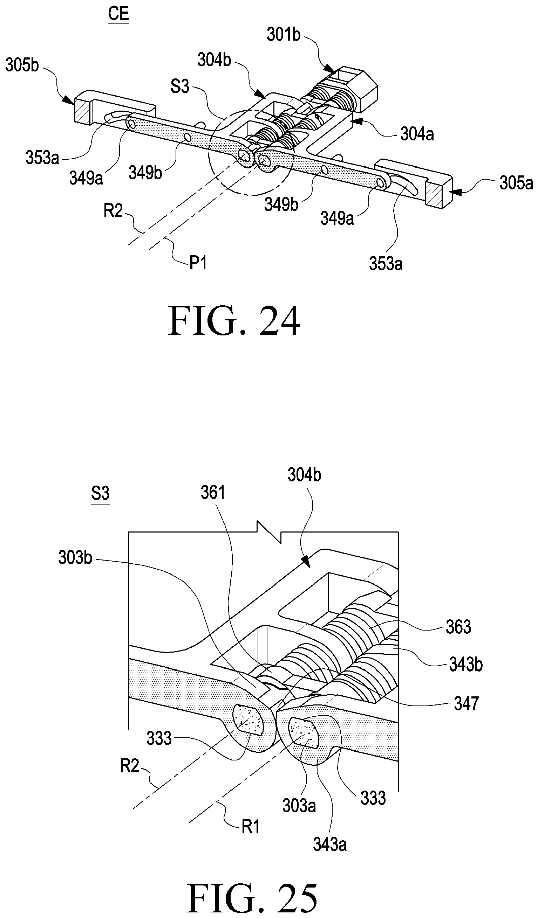

Further referring to FIG. 12 together with FIGS. 6 to 9, a hinge arm (e.g., the first hinge arm 304a or the second hinge arm 304b in FIG. 3) may generally have has an "L" shape, and may include a mounting portion 341a disposed in parallel to a pivot axis P1 or P2 or a rotation axis R1 or R2 and a slide portion 341b extending from the mounting portion 341a in a substantially perpendicular direction. In an embodiment, the first hinge arm 304a may include at least one first cam member 343a protruding from the mounting portion 341a, and the first cam member 343a may be substantially coupled to a gear shaft (e.g., the first gear shaft 303a or the second gear shaft 303b). For example, the first cam member 343a may be coupled in the state of surrounding the outer peripheral surface of the first gear shaft 303a. In another embodiment, the gear shaft 303a or 303b may include a flat surface 333 (see FIG. 25) formed on an the outer peripheral surface thereof. For example, the first cam member 343a may be substantially fixed to the gear shaft 303a or 303b, and may rotate with respect to the first hinge bracket 301a and/or the second hinge bracket 301b together with the gear shaft 303a or 303b. As the first cam member 343a rotates together with the gear shaft 303a or 303b, the slide portion 341b may substantially pivot about a rotation axis (e.g., the first rotation axis R1 or the second rotation axis R2) of the gear shaft 303a or 303b.

According to various embodiments, the first cam member 343a may include first valley portions 345a and first valley portions 345b provided on at least one surface thereof. In an embodiment, the first peak portions 345a and the first valley portions 345b may be provided on opposite surfaces of the first cam member 343a (e.g., the surface oriented in the -Y direction and the surface oriented in the -Y direction), respectively. When viewed from one side of the first cam member 343a, the first peak portions 345a may have a more protruding shape than the first valley portions 345b, and may be alternately arranged in the rotation direction of the first cam member 343a. In another embodiment, the first hinge arm 304a and/or the second hinge arm 304b may include a plurality (e.g., a pair) of first cam members 343a. According to some embodiments, the first hinge arm 304a and/or the second hinge arm 304b may include a plurality of pin holes 349. The pin holes 349 are provided through the first hinge arm 304a and/or the second hinge arm 304b (e.g., the slide portion 341b) in a direction parallel to the rotation axis of the gear shaft 303a or 303b (e.g., the firs rotation axis R1 or the second rotation axis R2), and may be provided at different distances from the rotation axis R1 or R2 of the gear shaft 303a or 303b. In an embodiment, the electronic device 200 and/or the hinge module 300 may further include a mounting member (e.g., a first mounting member 305a and a second mounting member 305b), wherein the mounting member 305a or 305b may be slidably bound to the hinge arm 304a or 304b.

FIG. 13 is a perspective view illustrating a first mounting member 305a of an electronic device (e.g., the electronic device 200 in FIG. 3) and/or a hinge module (e.g., the hinge module 300 in FIG. 6) according to various embodiments disclosed herein.

Referring further to FIG. 13 together with FIGS. 6 to 9, the mounting member may include a first mounting member 305a mounted on a first housing (e.g., the first housing 201 in FIG. 3); and a second mounting member 305b mounted on a second housing (e.g., the second housing 202 in FIG. 3). The first mounting member 305a may be located, for example, between a first support plate (e.g., the first support plate 213 in FIG. 3) and a first slide plate (e.g., the first slide plate 205a in FIG. 3), and the second mounting member 305b may be located between a second support plate (e.g., the second support plate 223 in FIG. 3) and a second slide plate (e.g., the second slide plate 205b in FIG. 3). In an embodiment, the first mounting member 305a and/or the second mounting member 305b may include a first slide groove 353a and a second slide groove 353b located to correspond to the pin holes 349. In some embodiments, the first mounting member 305a and/or the second mounting member 305b may include a slot 351 configured to accommodate a portion of a hinge arm 304a or 304b, e.g., the slide portion 341b, and a pair of first slide grooves 353a may be provided on opposite sides of the slot 351, respectively. The slide grooves 353a and/or 353b generally have trajectories extending in the X-axis direction, but may have curved trajectories having slightly different heights in the Z-axis direction in some embodiments.

According to the invention, the electronic device 200 and/or the hinge module 300 further includes slide pins 349a and 349b. Among the slide pins, a first pin 349a may be slidably accommodated in the first slide grooves 353a while being mounted in one of the pin holes 349 of the hinge arm 304a or 304b. Among the slide pins, a second pin 349b may be slidably accommodated in the second slide groove 353b while being mounted in one of the pin holes 349 of the hinge arm 304a or 304b. When the first pin 349a is located at a first distance D1 from the pivot axis of the hinge arm 304a or 304b, for example, the rotation axis R1 or R2 of the first gear shaft 303a or the second gear shaft 303b, the second pin 349b is located at a second distance different D2 from the first distance D1. For example, when the first housing 201 and/or the second housing 202 pivot by an external force, the mounting member 305a or 305b may not pivot with respect to the hinge arm 304a or 304b, and the external force applied to 201 and/or the second housing 202 may rotate the gear shaft 303a or 303b without substantial loss. When the first housing 201 and/or the second housing 202 pivot, a relative angular displacement occurs between the mounting member 305a or 305b and the hinge arm 304a or 304b, the electronic device 200 may be deviated in the stability of the unfolding or folding operation or mechanically damaged. For example, by slidably binding the mounting member 305a or 305b and the hinge arm 304a or 304b at two points having different distances from the rotation axis R1 or R2, it is possible to stabilize the pivot operations of the housings (e.g., the first housing 201 and/or the second housing 202) or to improve the mechanical reliability of the electronic device 200.

According to the invention, the distance range M in which the slide pins 349a and 349b move in the mounting member 305a or 305b is smaller than the distance between the first pin 349a and the second pin 349b (e.g., the difference between the first distance D1 and the second distance D2). Here, the "distance range in which the slide pins 349a and 349b move" refers to a range of distances generally measured in the X-axis direction, and may not include a movement in the Z-axis direction due to the curved trajectories of the slide grooves 353a and 353b. In some embodiments, even when the moving distance of the slide pins 349a and 349b in the Z-axis direction is included, the distance range M in which the first pin 349a or the second pin 349b moves on the mounting member 305a or 305b may be smaller than the distance I between the first pin 349a and the second pin 349b. For example, the first pin 349a and the second pin 349b may be mounted in the hinge arm 304a or 304b (e.g., the slide portion 341b) with a sufficient distance therebetween, and the first slide groove 353a and the second slide grooves 353b may be arranged in the X-axis direction with a predetermined distance therebetween.

FIG. 14 is a view illustrating positional relationship between the pivot axes P1 and P2 and/or the rotation axes R1 and R2 of an electronic device (e.g., the electronic device 200 in FIG. 3) and/or a hinge module (e.g., the hinge module 300 in FIG. 3) according to various embodiments disclosed herein.

In the detailed description made with reference to FIG. 14, it is noted that the Cartesian coordinate system referred to in the description regarding relative movements is based on the width direction (e.g., the X-axis direction) and/or the thickness direction (e.g., the Z-axis direction) of the first housing 201, for example, the first support plate 213.

Further referring to FIG. 14, the first housing and the second housing (e.g., the first housing 201 and the second housing 202 in FIG. 3) may rotate substantially about the pivot axis P1 or P2, and the hinge arm 304a or 304b may pivot about the rotation axis R1 or R2 of the gear shaft 303a or 303b while being slidably disposed on the first housing 201 or the second housing 202. In an embodiment, as the first pivot axis P1 and the second pivot axis P2 are closer to each other, it may be easier to miniaturize the electronic device 200. In FIG. 14, the first pivot axis P1 may be substantially the center of the radius of curvature of the trajectory T1 provided by the first rotational rail (e.g., the first rotation rail 315a in FIG. 10). In FIG. 14, the second pivot axis P2 may be substantially the center of the radius of curvature of the trajectory T2 provided by the second rotational rail (e.g., the second rotation rail 315a in FIG. 10). In another embodiment, by utilizing spur gears 331 engaged with each other, the first housing 201 and the second housing 202 may be interlocked with each other. This interlocking structure may have sufficient mechanical strength when the spur gears 331 have an appropriate size. For example, there may be a limitation in making the pivot axis P1 or P2 of the housings 201 and 202 (e.g., the support plate 213 or 223) and the rotation axis R1 or R2 of the gear shafts 303a and 303b (e.g., the spur gears 331) coincide with each other.

According to various embodiments, when the hinge arm 304a or 304b pivots together with the gear shaft 303a or 303b, the hinge arm 304a or 304b may substantially maintain the state parallel to the rotation bracket 302a or 302b and/or the support plate 213 or 223. While the hinge arm 304a or 304b pivots while maintaining the state parallel to the support plate 213 or 223 in the state in which the pivot axis P1 or P2 of the housings 201 and 202 and the rotation axis (e.g., the rotation axis R1 or R2) of the hinge arms 304a and 304b do not coincide with each other, the distance between the hinge arm 304a or 304b (e.g., the slide portion 341b) and the support plate 213 or 223 may change. In an embodiment, when the first support plate 213 is vertically aligned to a straight line L1 connecting the first pivot axis P1 and the first rotation axis R1 of FIG. 14 (L2) (hereinafter, referred to as a "vertical alignment position L2"), the distance between the first hinge arm 304a and the first support plate 213 in the Z-axis direction may be the minimum. For example, when the housings 201 and 202 rotate or pivot from the unfolded position to the vertical alignment position L2, the distance between the hinge arm 304a or 304b and the support plate 213 or 223 may gradually decrease. According to another embodiment, when the housings 201 and 202 rotate or pivot from the vertical alignment position L2 to the folded position, the distance between the hinge arm 304a or 304b and the support plate 213 or 223 may gradually increase.

According to various embodiments, when the housings 201 and 202 rotate or pivot, the trajectory of the first slide groove(s) 353a and/or the trajectory of the second slide groove 353b may be set in accordance with a change in the distance between the hinge arm 304a or 304b and the support plate 213 or 223. For example, the hinge arm 304a or 304b may be slidably bound to the mounting member 305a or 305b via slide pins 349a and 349b, and the slide pins 349a and 349b may move substantially on the mounting members 305a and 305b along a trajectory corresponding to the change of the distance between the hinge arm 304a or 304b and the support plate 213 or 223. For example, the trajectories of the slide grooves 353a and 353b described with reference to FIG. 13 may allow the slide pins 3449a and 349b to move in the Z-axis direction to correspond to the change of the distance between the hinge arm 304a or 304b and the support plate 213 or 223 when the first housing 201 and/or the second housing 202 pivot while guiding the sliding of the first housing 201 and/or the second housing 202 substantially in the X-axis direction with respect to the hinge module 300.

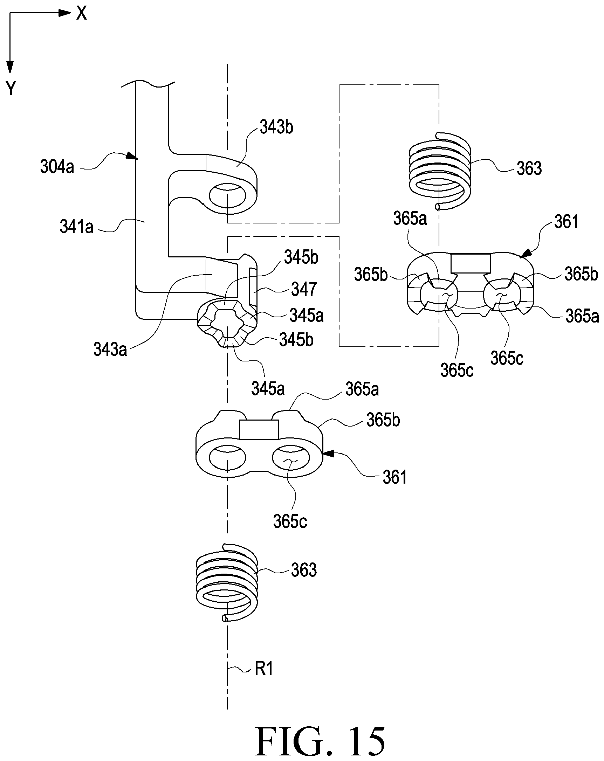

FIG. 15 is a view illustrating an arrangement structure of cam members 343a and 361 in an electronic device (e.g., the electronic device 200 in FIG. 3) and/or a hinge module (e.g., the hinge module 300 in FIG. 6) according to various embodiments of the disclosure.

Further referring to FIG. 15, the electronic device 200 and/or the hinge module 300 may further include at least one second cam member 361 and at least one elastic member 363. The second cam member 361 may be coupled to gear shafts 303a and 303b, and may come into slide contact with a first cam member 343a as a hinge arm 304a or 304b pivots. The elastic member 363 may provide an elastic force that brings the second cam member 361 into close contact with the first cam member 343a, thereby generating a frictional force between the first cam member 343a and the second cam member 361. For example, the electronic device 200 and/or the hinge module 300 may maintain the first housing 201 and the second housing 202 in a stationary state at a predetermined angular position by further including the second cam member 361 and/or the elastic member 363. In some embodiments, the frictional force between the first cam member 343a and the second cam member 361 may prevent the first housing 201 and/or the second housing 202 from pivoting irrespective of the user's intention in the state in which no external force is applied. In another embodiment, the electronic device 200 and/or the hinge module 300 may further include a washer 369 disposed between the spur gear 331(s) and the elastic member 363. For example, the washer 369 may prevent the gear shafts 303a and 303b from directly rubbing against the elastic member 363 when rotating.

According to various embodiments, the second cam member 361 may include a plurality (e.g., a pair) of rotation holes 365c, and may include second peak portions 365a and second valley portions 365b provided around the rotation holes 365c. In an embodiment, the gear shafts 303a and 303b may be rotatably accommodated in the rotation holes 365c, respectively. For example, the second cam member 361 is substantially coupled to the gear shafts 303a and 303b in a non-rotatable state with respect to the first hinge bracket 301a and the second hinge bracket 301b, and may allow the rotation of the gear shafts 303a and 303b relative to the hinge brackets 301a and 301b. In an embodiment, the second cam members 361 may be disposed to face each other on both surfaces of the first cam member 343a, and the second cam members 361 may be in close contact with the first cam member 343a by the elastic force3 of the elastic member 363. The elastic member 363 may be, for example, a compression coil spring and may be disposed to substantially surround a gear shaft 303a or 303b. In the illustrated embodiment, one first cam member 343a may be disposed between a pair of second cam members 361, and the elastic force of the elastic member 363 is applied to the opposite surfaces of the first cam member 343a in the Y-axis direction. For example, since the elastic forces of substantially the same magnitude act on the first cam member 343a in the -Y direction and the Y direction, it is possible to prevent unnecessary load from being applied between the first cam member 343a and the hinge arm 304a or 304b (e.g., the mounting portion 341a). In some embodiments, as illustrated in FIG. 6 or FIG. 9, when one pair of first cam members 343a are provided, two pairs of second cam members 361 may be provided, and one pair of second cam members 361 may be disposed between the first hinge arms. In the structure in which the one pair of second cam members 361 are disposed between the first cam members 343a, the hinge module 300 (e.g., the hinge arm 304a or 304b) may further include a dummy member 343b provided on the mounting portion 341a. The dummy member 343b may be disposed between the first cam members 343a in the state in which a plurality (e.g., a pair) of elastic members are supported on the opposite surfaces of the dummy member 343b, respectively. For example, in the structure in which the plurality of elastic members 363 are disposed between the plurality of first cam members 343a, the elastic members 363 may provide an elastic force to the first cam member 343a and/or the second cam member 343b in the state of being isolated from each other by the dummy member 343b.

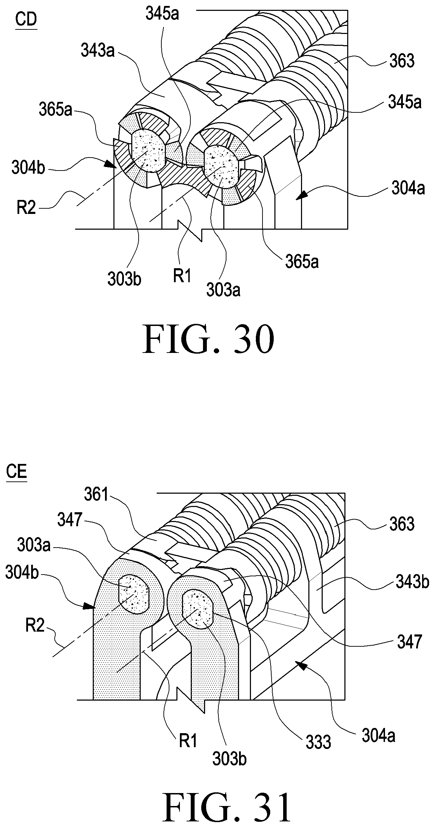

According to various embodiments, the second peak portions 365a and the second valley portions 365b may be alternately disposed along the circumferences of the rotation holes 365c. In some embodiments, when the first cam member 343a rotates with the gear shaft 303a or 303b, the first peak portions 345a may come into slide contact with the second peak portions 365a or may be engaged with the second valley portions 365b. If the elastic members 363 are in the state of providing an elastic force, in a section in which the first peak portions 345a are in slide contact with the second peak portions 365b, the elastic force of the elastic members 363 may be converted into a rotation force that rotates the first cam member 343a in a direction to bring the first peak portions 345a into engagement with the second valley portions 365b. At the position at which the first peak portions 345a are engaged with the second valleys 365b, in the electronic device 200, for example, the first housing 201 and the second housing 202 may maintain a substantially stationary state with respect to each other. According to an embodiment, if the first peak portions 345a are not in the state of being fully engaged with the second valley portions 365b at a position at which the first housing 201 and the second housing 202 are folded to face each other, the elastic force of the elastic members may act as a force for bringing the first housing and the second housing into further close contact with each other and/or a force for maintaining the first housing and the second housing in the folded state. This configuration will be described in more detail with reference to FIG. 30.

According to various embodiments, the electronic device 200 and/or the hinge module 300 may further include a stopper protrusion 347 provided on the outer peripheral surface of the first cam member 343a. The first hinge arm 304a may be coupled to the first gear shaft 303a via the first cam member 343a, and the second hinge arm 304b may be coupled to the second gear shaft 303b via another first cam member 343a. In a state of being coupled to the gear shaft 303a or 303b, the first cam member 343a of the first hinge arm 304a may be disposed adjacent to the first cam member 343a of the second hinge arm 304b. The stopper protrusion 347 may limit the rotation range of the first cam member 343a, for example, the angular range in which the electronic device 200 is unfoldable by interfering with the stopper protrusion 347 of the adjacent first cam member 343a in the state in which the electronic device 200 is unfolded at a predetermined angle. In an embodiment, since the stopper protrusions 347 interfere with each other at a position at which the second housing 202 forms an angle of 180 degrees with respect to the first housing 201, the electronic device 200 may be unfolded from the folded state to the position at which the second housing 202 forms an angle of 180 degrees with respect to the first housing 201.

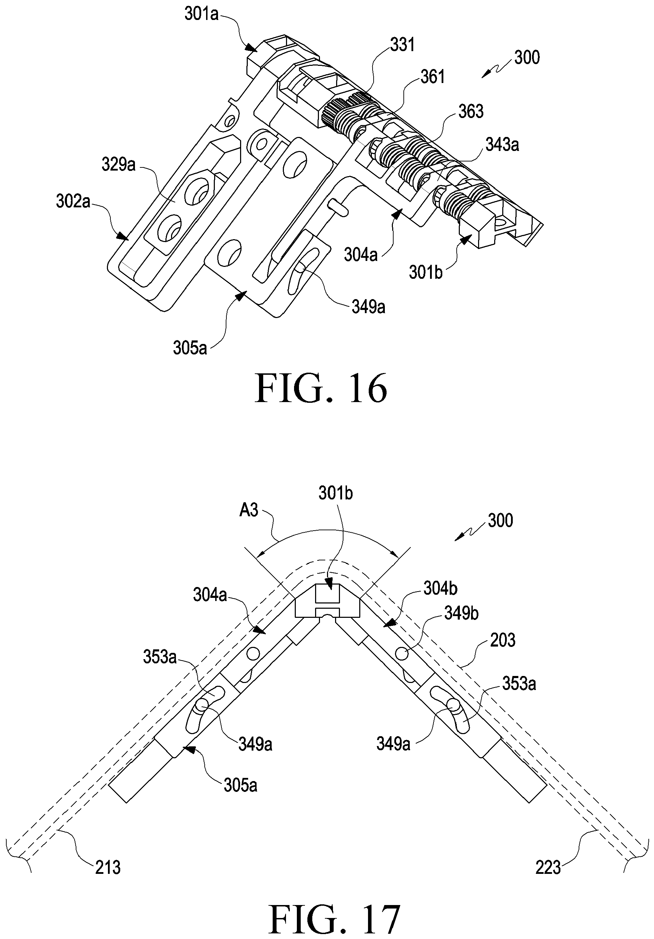

FIG. 16 is a perspective view illustrating an operation in which an electronic device (e.g., the electronic device 200 in FIG. 3) and/or a hinge module (e.g., the hinge module 300 in FIG. 6) according to various embodiments disclosed herein are folded. FIG. 17 is a perspective view illustrating an operation in which the electronic device 200 and/or the hinge module 300 according to various embodiments disclosed herein are folded.

Further referring to FIGS. 16 and 17 together with FIGS. 1 and 8, when the first housing 201 and/or the second housing 202 gradually rotate from the unfolded position to the folded position, the first housing 201 and/or the second housing 202 may slide in a direction closer to the hinge module 300, for example, the pivot axis P1 or P2. In an embodiment, when the first housing 201 and/or the second housing 202 pivot, the slide members 329a and 329b may guide the sliding of the first housing 201 and/or the second housing 202 while sliding on the rotation brackets 302a and 302b. The slide members 329a and 329b are substantially linearly movable on the rotation brackets 302a and 302b. It has been described above that the length of the rear surface of the electronic device 200 (e.g., the length measured in the X-axis direction in FIG. 1) may be different between the unfolded position and the folded position of the electronic device 200. The change in length may be implemented on the rear surface of the electronic device 200 since the slide members 329a and 329b slide on the rotation brackets 302a and 302b. In some embodiments, as the length of the rear surface of the electronic device 200 is changed, the area in which a partial area of the rear surface of the electronic device 200 (e.g., an area indicated by "V1" and/or an area indicated "V2" in FIG. 1) is exposed to the external space may contract or expand.

According to various embodiments, when the first housing 201 and/or the second housing 202 pivot, the slide pins 349a and 349b may slide in the slide grooves 353a and 353b. As described above, when the pivot axis of the hinge arm 304a or 304b (e.g., the rotation axis R1 or R2 in FIG. 14) does not coincide with the pivot axis (e.g., the pivot axis P1 or P2 in FIG. 14) of the first housing 201 and/or the second housing 202, the slide portion 341b of the hinge arm 304a or 304b (e.g., the slide pins 349a and 349b) may move closer to or away from the support plate 213 or 223 while the first housing 201 and/or the second housing 202 pivot, whereby the slide portion 341a of the hinge arm 304a or 304b may maintain a parallel state with respect to the support plate 213 or 223. As illustrated in FIG. 17, when the first hinge arm 304a pivots by an angle of about 30 to 45 degrees from the position at which the electronic device 200 is unfolded, the slide pins 349a and 349b move may be located closest to the first support plate 213.

According to various embodiments, when the first housing 201 and/or the second housing 202 pivot, a partial area of the flexible display 203 (e.g., the flexible display 103 in FIG. 1 or FIG. 2), for example, the folding area A3 of FIG. 3 may be deformed into a curved shape around the hinge module 300 (e.g., the second hinge bracket 301b). As described above, the length of the flexible display 203 does not substantially change in the deformed operation, and since the first housing 201 and/or the second housing 202 slide, it is possible to prevent a tension or a compressive force from being applied to the flexible display 203 in the X-axis direction.

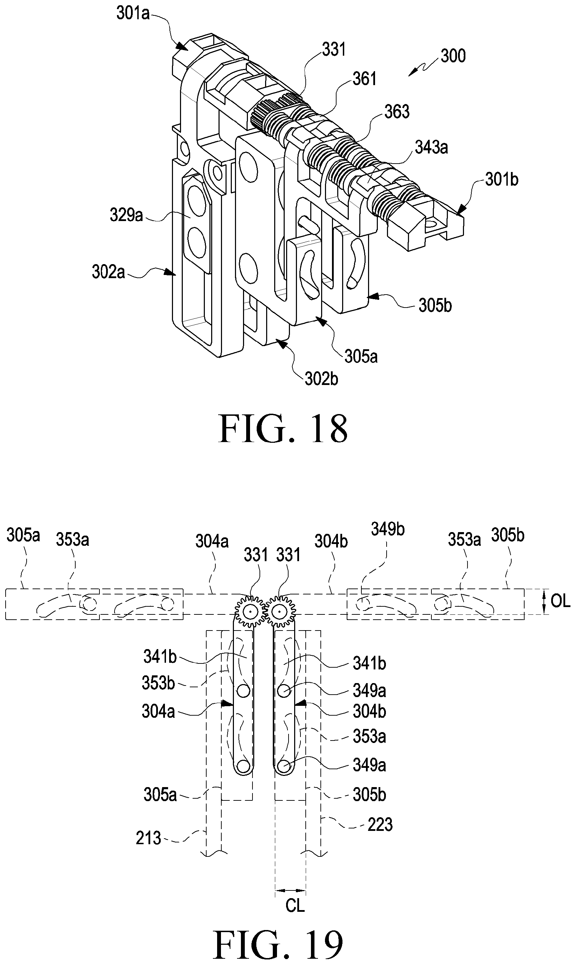

FIG. 18 is a perspective view illustrating a state in which an electronic device (e.g., the electronic device 200 in FIG. 3) and/or a hinge module (e.g., the hinge module 300 in FIG. 6) according to various embodiments disclosed herein are folded. FIG. 19 is a perspective view illustrating a state in which the electronic device 200 and/or the hinge module 300 according to various embodiments disclosed herein are folded.

Referring to FIGS. 18 and 19, compared with the unfolded position, at the folded position of the electronic device 200, the support plates 213 and 223 and/or the mounting members 305a and 305b may move closer to a rotation axis R1 or R2. In an embodiment, when the difference in height between the slide portion 341b and the support plate 213 or 223 at the unfolded position of the electronic device 200 is defined as a first height OL, at the folded position, the slide portion 341b may be located at a second height CL higher than the first height OL from the support plate 213 or 223. The slide grooves 353a and 353b may have curved trajectories to correspond to a change in the distance or height difference between the slide portion 341b and the support plate 213 or 223. In some embodiments, by slidably binding the slide portion 341b to the mounting member 305a or 305b at two points at different distances from the rotation axis R1 or R2, the slide portion 341b may pivot about the rotation axis R1 or R2 while maintaining the state of being substantially parallel to the mounting member 305a or 305b and/or the support plate 213 or 223.

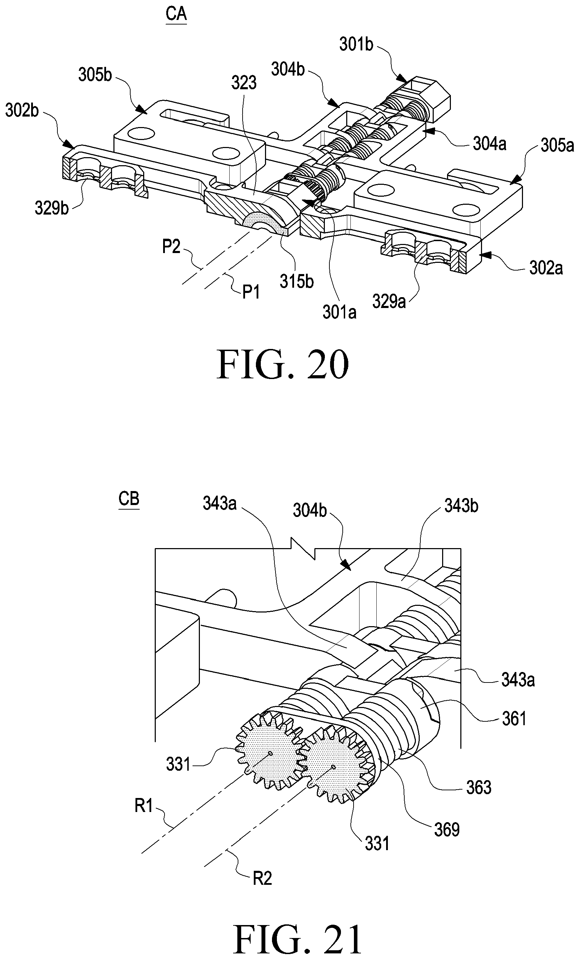

FIGS. 20 to 31 illustrate the above-described operations of the electronic device 200 and/or the hinge module 300 as described above by cutting out different portions of the hinge module 300.

FIG. 20 is a perspective view illustrating the hinge module 300 cut along line "CA" in FIG. 9.

Referring to FIG. 20, in the unfolded state of the electronic device 200, a first rotation part (e.g., the first rotation part 204a in FIG. 5), for example, the rotation arm 323 of the rotation bracket 302a or 302b may interfere with one end of the rotation rail 315a or 315b. For example, the rotation rails 315a and 315b extend while forming a generally circular arc trajectory, but one ends of the rotation rails 315a and 315b may protrude from the circular arc trajectories and may be configured to interfere with the rotation arms 323. In the state illustrated in FIG. 20, the rotation arm 323 of the second rotation bracket 302b may limit the clockwise pivoting of the second rotation bracket 302b by interfering with the end of the second rotation rail 315b. Although not illustrated, in the state illustrated in FIG. 20, the rotation arm 323 of the first rotation bracket 302a may limit the counterclockwise pivoting of the first rotation bracket 302a by interfering with the end of the first rotation rail 315a. For example, the rotation arms 323 of the rotation brackets 302a and 302b and the rotation rails 315a and 315b may allow the housings (e.g., the first housing 201 and the second housing 202 in FIG. 3) to pivot from the unfolded state to a direction in which the electronic device 200 is folded, but may limit the pivoting in the opposite direction. A structure for limiting the rotation range may also be provided via a stopper protrusion (e.g., the stopper protrusion 347 in FIG. 15), which will be described with reference to FIG. 25.

FIG. 21 is a view illustrating the hinge module 300 cut along line "CB" in FIG. 9.

Referring to FIG. 21, in the unfolded state of the electronic device 200, in the interlocking part (e.g., the interlocking part 204b in FIG. 5), for example, the spur gears 331 of the gear shafts 303a and 303b may be engaged with each other so that when one rotates in one direction, the other rotates in the opposite direction. In an embodiment, when an external force is applied and at least one of the first housing 201 and the second housing 202 pivots in one direction with respect to the hinge module 300, the gear shafts 303a and 303b are interlocked with each other, for example, by the gear shafts 303a and 303b, and the other one of the first housing 201 and the second housing 202 may pivot in the reverse direction. For example, as an external force is applied, the first housing 201 and the second housing 202 may pivot in opposite directions with respect to each other to be unfolded or folded.

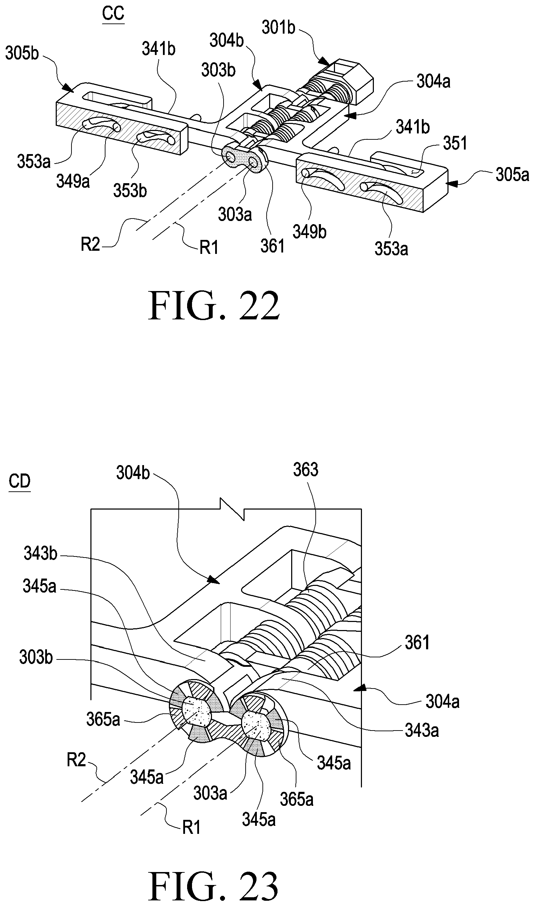

FIG. 22 is a perspective view illustrating the hinge module 300 cut along line "CC" in FIG. 9.

Referring to FIG. 22, the second rotation part (e.g., the second rotation part 204d in FIG. 5) may include the hinge arms 304a and 304b and the mounting members 305a and 305b. By slidably binding the hinge arms 304a and 304b and the mounting members 305a and 305b at a plurality of points at different distances from the rotation axis R1 or R2, when an external force is applied to the housings 201 and 202 and the housings 201 and 202 pivot, the second rotation part 204d may limit the relative angular displacement between the housing 201 or 202 and the hinge arm 304a or 304b (e.g., the mounting members 305a and 305b and the slide portions 341b).

FIG. 23 is a view illustrating the hinge module 300 cut along the line "CD" in FIG. 9.

Referring to FIG. 23, in the unfolded state of the electronic device 200, the first peak portions 345a of the first cam member 343a and the second peak portions 365a of the second cam member 361 may be located such that the inclined sections thereof are in slide contact with each other. For example, at the position illustrated in FIG. 23, the elastic force of the elastic member 363 may be converted into a force for rotating the first hinge arm 304a counterclockwise and a force for rotating the second hinge arm 304b clockwise. For example, in the unfolded position of the electronic device 200, the first housing 201 and/or the second housing 202 may receive a rotation force acting in a direction away from the folded position of FIG. 2. As described above with reference to FIG. 20, since the structures of the rotation arm 323 and/or the rotation rail 315a or 315b interfere with each other and the elastic force of the elastic member 363 acts on the first housing 201 and/or the second housing 202 in a direction of moving the first housing 201 and/or the second housing 202 away from the folded position, the electronic device 200 may stably maintain the unfolded state. In some embodiments, the first cam member 343a and the second cam member 361 may not include the peak portions 345a and 365a and the valley portions 345b and 365b. In the structure that does not include the peak portions 345a and 365a and the valley portions 345b and 365b, the elastic force of the elastic member 363 may generate a frictional force between the first cam member 343a and the second cam member 361. For example, the frictional force generated between the first cam member 343a and the second cam member 361 may maintain the first housing 201 and/or the second housing 202 in the stationary state when an external force greater than or equal to a predetermined magnitude does not act. In this way, the first cam member 343a, the second cam member 361, and/or the elastic member 363 may stably maintain the stationary state of the first housing 201 and/or the second housing 202 by restricting the first housing 201 and/or the second housing 202 from pivoting irrespective of the user's intention. For example, the first cam member 343a, the second cam member 361, and/or the elastic member 363 may substantially function as the resistance part 204c of FIG. 5.

FIG. 24 is a perspective view illustrating the hinge module 300 cut along line "CE" in FIG. 9. FIG. 25 is an enlarged view illustrating a portion indicated by "S3" in FIG. 24.

Referring to FIGS. 24 and 25, in the unfolded state of the electronic device 200, the stopper protrusions 347 of the two adjacent first cam members 343a may interfere with each other. For example, the first housing 201 and/or the second housing 202 may be restricted from pivoting in a direction away from the folded position. In an embodiment, the interference structure between the stopper protrusions 347 may set the angular range in which the first housing 201 and/or the second housing 202 are pivotable together with the structures of the rotation arm 323 and the rotation rail 315a or 315b in FIG. 20. In some embodiments, the interference structure between the stopper protrusions 347 may be combined with the rotation force converted by the cam structure (e.g., the first cam member 343a and the second cam member 361 in FIG. 15) to maintain the electronic device in the stationary state at a predetermined angular position (e.g., a position at which the electronic device is unfolded at an angle of 180 degrees).

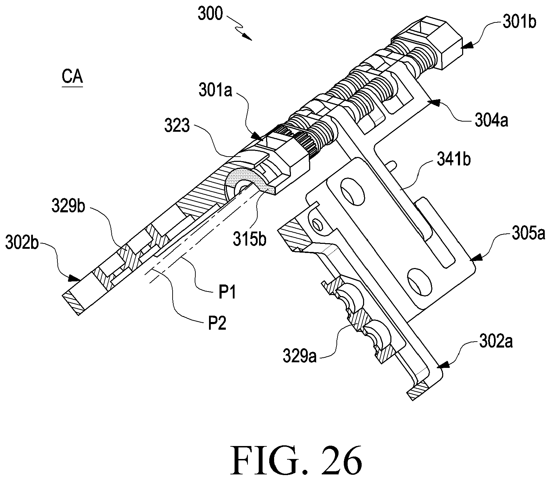

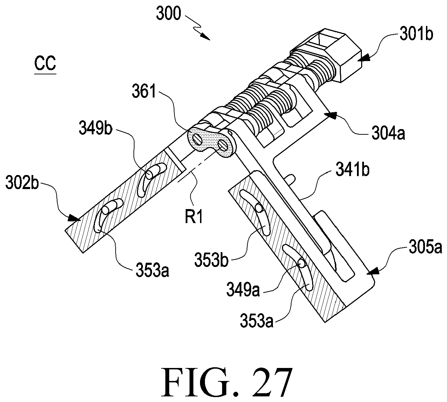

FIG. 26 is a perspective view illustrating the hinge module 300 cut along line "CA" in FIG. 9 in the folding operation of the electronic device (e.g., the electronic device 200 of FIG. 3) and/or the hinge module (e.g., the hinge module 300 of FIG. 6) according to various embodiments disclosed herein. FIG. 27 is a perspective view illustrating the hinge module 300 cut along line "CC" of FIG. 9 in the folding operation of the electronic device 200 and/or the hinge module 300 according to various embodiments disclosed herein.

According to various embodiments, as the electronic device 200 is gradually deformed from the unfolded state to the folded position, the first housing 201, the second housing 202, the slide members 329a and 329b, and/or the mounting members 305a and 305b may slide in a direction gradually approaching the pivot axis P1 or P2 (or the rotation axis R1 or R2). While the first housing 201 and/or the second housing 202 pivot, the rotation bracket 302a or 302b may pivot about the pivot axis P1 or P2 by being guided by the rotation rail 315a or 315b. As described above, while the first housing 201 and/or the second housing 202 pivot, the hinge arm 304a or 304b, for example, the slide portion 341b, may move closer to or away from the support plate (e.g., the support plate 213 or 223 in FIG. 3) while maintaining a state parallel to the support plate 213 or 223.

Further referring to FIG. 15, while the first housing 201 and/or the second housing 202 pivot, the first cam member 343a may come into slide contact with the second cam member 361 while rotating together with the gear shaft 303a or 303b. When no peak portions and valley portions (e.g., the peak portions 345a and 365a and the valley portions 345b and 365b in FIG. 15) are provided, the first cam member 343a and the second cam member 361 are generate a frictional force. The frictional force generated by the first cam member 343a and the second cam member 361 may maintain the first housing 201 and/or the second housing 202 in the stationary state at any angular position, and may allow the pivoting of the first housing 201 and/or the second housing 202 when an external force equal to or greater than a predetermined magnitude is applied. In the structure including the peak portions 345a and 365a, the valley portions 345b and 365b, and/or the elastic member 363, the first cam member 343a and the second cam member 361 may convert the elastic force of the elastic member 363 into a rotation force. For example, in a certain angular section, the first cam member 343a and the second cam member 361 may apply a rotation force applied in a direction of unfolding the electronic device 200, and in another angular section, the first cam member 343a and the second cam member 361 may apply a rotation force applied in a direction of folding the electronic device 200. According to another embodiment, in the structure including the peak portions 345a and 365a, the valleys 345b and 365b and/or the elastic member 363, the first cam member 343a and the second cam member 361 may be combined with another mechanical structure (e.g., the stopper protrusion 347 in FIG. 25) to maintain the electronic device 200 in a predetermined angular position, for example, the unfolded position or state as illustrated in FIG. 1. In another embodiment, the peak portions 345a and 365a and the valley portions 345b and 365b may maintain the electronic device 200 in the state in which the first housing 201 and the second housing 202 are stationary at an inclined position with respect to each other at any angular position between the unfolded position and the folded position. For example, when the first housing 201 and the second housing 202 are at an inclined position with respect to each other by an angle of about 90 degrees, the first peak portions 345a may be engaged with the second valley portions 365b. In this way, the section in which the first cam member 343a and the second cam member 361 generate a rotation force and/or the structure of maintaining the first housing 201 and the second housing 202 in a stationary state at the inclined position may vary depending on the number and positions of the peak portions 345a and 365a and the valley portions 345b and 365b included in the first cam member 343a and/or the second cam member 361.

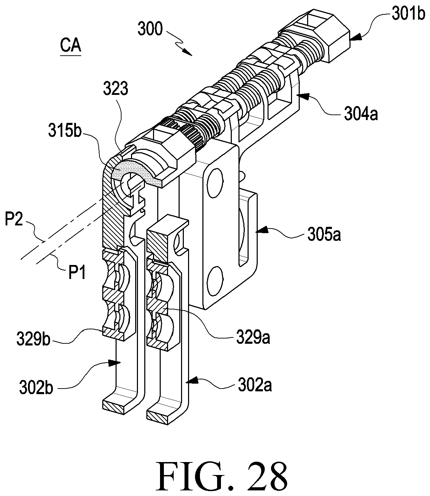

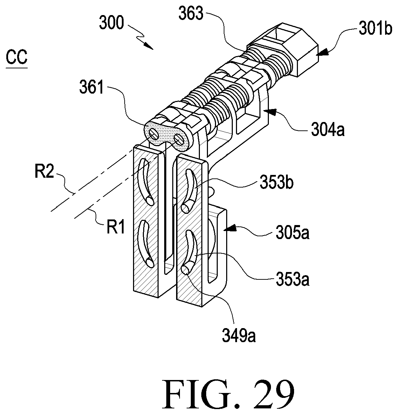

FIG. 28 is a perspective view illustrating the hinge module 300 cut along line "CA" in FIG. 9 in the folded state of the electronic device (e.g., the electronic device 200 of FIG. 3) and/or the hinge module (e.g., the hinge module 300 of FIG. 6) according to various embodiments disclosed herein. FIG. 29 is a perspective view illustrating the hinge module 300 cut along line "CC" of FIG. 9 in the folded state of the electronic device 200 and/or the hinge module 300 according to various embodiments disclosed herein.

Referring to FIGS. 28 and 29, in the folded state of the electronic device 200, the first rotation bracket 302a and the second rotation bracket 302b may be located to substantially face each other. In some embodiments, in the folded state of the electronic device 200, slide plates 205a and 205b and/or rear plates 201b and 202b may be disposed between the first rotation bracket 302a and the second rotation bracket 302b. For example, the description "located to face each other" is an expression describing the relative positions of two components, for example, the first rotation bracket 302a and the second rotation bracket 302b, and in some embodiments, another structure may be disposed between two facing components. In the folded state of the electronic device 200, the first hinge arm 304a and the second hinge arm 304b may be located to substantially face each other, and the first mounting member 305a may be located to face the second mounting member 305b. In the folded state of the electronic device, the slide members 329a and 329b and the mounting members 305a and 305b may be located closest to the pivot axis P1 or P2 and/or the rotation axis R1 or R2 within the range in which the first housing 201 and/or the second housing 202 slides. In the state illustrated in FIGS. 28 and 29, since the first housing 201 and the second housing 202 substantially interfere with each other, the first rotation bracket 302a is not rotatable clockwise, and the second rotation bracket 302b is not rotatable counterclockwise.

FIG. 30 is a perspective view illustrating the hinge module 300 cut along line "CD" in FIG. 9 in the folded state of the electronic device (e.g., the electronic device 200 of FIG. 3) and/or the hinge module (e.g., the hinge module 300 of FIG. 6) according to various embodiments disclosed herein.

Referring to FIG. 30, in the folded state of the electronic device 200, the first cam member 343a and the second cam member 343b may provide a rotation force for causing the first housing 201 and the second housing 202 to pivot in the folding direction. For example, in the folded state of the electronic device 200, when the first peak portions 345a are not fully engaged with the second valley portions 365b, the elastic force of the elastic member 363 may be converted into or provided as a rotation force for causing the first housing 201 and the second housing 202 to pivot in the folding direction. For example, the resistance part (e.g., the resistance part 204c in FIG. 5) may provide a force for stably maintaining the folded state of the electronic device 200.

FIG. 31 is a perspective view illustrating the hinge module 300 cut along line "CE" in FIG. 9 in the folded state of the electronic device (e.g., the electronic device 200 of FIG. 3) and/or the hinge module (e.g., the hinge module 300 of FIG. 6) according to various embodiments disclosed herein.

Referring to FIG. 31, in the folded state of the electronic device 200, the stopper protrusions 347 may be located away from each other. For example, in the folded state of the electronic device 200, the stopper protrusions 347 may allow the first hinge arm 304a to pivot counterclockwise and the second hinge arm 304b to pivot clockwise. When the electronic device 200 is unfolded, the first hinge arm 304a and/or the second hinge arm 304b may pivot so that the stopper protrusions 347 of two adjacent first hinge cams 343a may interfere with each other. For example, in the electronic device 200, the first housing 201 and the second housing 202 may pivot between a position at which the first housing 201 and the second housing 202 face each other in the state of interfering with each other and a position at which the stopper protrusions 347 of the two adjacent first hinge cams 343a interfere with each other. In another embodiment, at a position at which the first housing 201 and the second housing 202 interfere with each other in the state of facing each other, the peak portions and the valley portions (e.g., the peak portions 345a and 365a and the valley portions 345b and 365b in FIG. 15) may provide a rotation force for bringing the first housing 201 and the second housing 202 into further close contact with each other. In another embodiment, at a position at which the stopper protrusions 347 of the two adjacent first hinge cams 343a interfere with each other, the peak portions and the valley portions (e.g., the peak portions 345a and 365a and the valley portions 345b and 365b in FIG. 15) may provide a rotation force for bringing the stopper protrusions 347 of the two adjacent first hinge cams 343a into further close contact with each other.

As described above, an electronic device (e.g., the electronic device 100 or 200 in FIGS. 1 to 5) according to various embodiments disclosed herein may include a first housing (e.g., the first housing 101 or 201 in FIGS. 1 to 3), a second housing (e.g., the second housing 102 or 202 in FIGS. 1 to 3) pivotably connected to the first housing, and a hinge module (e.g., the hinge module 204 or 300 in FIG. 3 or FIG. 6) configured to rotatably couple the first housing and the second housing to each other, and a flexible display (e.g., the flexible display 103 or 203 in FIGS. 1 to 3) disposed to extend from one surface of the first housing to one surface of the second housing across an area in which the hinge module is disposed, wherein the hinge module includes a pair of gear shafts (e.g., the gear shafts 303a and 303b in FIG. 6) engaged with each other to rotate in opposite directions with respect to each other, a hinge arm (e.g., the first hinge arm 304a and the second hinge arm 304b in FIG. 6) mounted on a corresponding one of the gear shafts and rotates about a rotation axis (e.g., the first rotation axis R1 and the second rotation axis R2 in FIG. 9 or FIG. 21) of the corresponding gear shaft, a mounting member (e.g., the first mounting member 305a and the second mounting member 305b in FIG. 6) which is mounted on a corresponding one of the first housing and the second housing, and a plurality of slide pins (e.g., the slide pins 349a and 349b in FIG. 6 or FIG. 9) coupled to the hinge arm and slidably coupled to the mounting member, wherein a first pin (e.g., the first pin 349a in FIG. 6 or FIG. 9) of the slide pins is located at a first distance (e.g., the first distance D1 in FIG. 9) from the rotation axis of the corresponding gear shaft, and a second pin (e.g., the second distance D1 in FIG. 9) different from the first distance from the rotation axis of the corresponding gear shaft.

According to various embodiments, the distance (e.g., the distance I in FIG. 9) between the first pin and the second pin may be set to be greater than a distance (e.g., the distance range M in FIG. 9) by which the first pin or the second pin moves on the mounting member.

According to various embodiments, the mounting member may include at least one first slide groove (e.g., the first slide groove 353a in FIG. 6 or FIG. 9) configured to slidably receive the first pin; and at least one second slide groove (e.g., the second slide groove 353b in FIG. 6 or FIG. 9) configured to slidably receive the second pin.

According to various embodiments, at least one of the first slide groove and the second slide groove may extend along a curved trajectory.

According to various embodiments, the mounting member may further include a slot (e.g., the slot 351 in FIG. 6 or FIG. 9) configured to for receive a portion of the hinge arm, wherein the first slide groove may be provided on each side of the slot.

According to various embodiments, the hinge module may further include at least one first cam member (e.g., the first cam member 343a in FIG. 6 or FIG. 15) provided at one end of the hinge arm and mounted to surround the corresponding gear shaft, and at least one second cam member (e.g., the second cam member 361 in FIG. 6 or FIG. 15) including rotation holes (e.g., the rotation holes 365c in FIG. 15) configured to rotatably accommodate the gear shafts, respectively, wherein the second cam member is coupled to the gear shafts in the state of facing the first cam member, wherein the first cam member may be configured to come into slide contact with the second cam member while rotating together with the corresponding gear shaft.

According to various embodiments, the hinge module may further include at least one elastic member (e.g., the elastic member 363 in FIG. 6 or FIG. 15) disposed to surround the corresponding gear shaft, wherein the elastic member may be configured to provide an elastic force for forcing the second cam member into close contact with the first cam member.

According to various embodiments, a pair of second cam members may be disposed to respectively face opposite surfaces of one first cam member.

According to various embodiments, the hinge module may further include first peak portions (e.g., the first peak portions 345a in FIG. 15) and first valley portions (e.g., the first valley portions 345b in FIG. 15) which are provided on one surface of the first cam member and alternately arranged in the rotation direction of the first cam member, and second peak portions (e.g., the second peak portions 365a in FIG. 15) and second valley portions (e.g., the second valley portions 365b in FIG. 15) which are provided on one surface of the second cam member and alternately arranged in the rotation direction of the first cam member, wherein the first peak portions and the second valley portions may be configured to be selectively engaged with each other as the first cam member rotates.

According to various embodiments, the hinge module may further include a stopper protrusion (e.g., the stopper protrusion 347 in FIG. 9 or FIG. 25) provided on an outer peripheral surface of the first cam member, and the first cam member mounted on one of the gear shafts and the other first cam member mounted on the other one of the gear shafts may be disposed adjacent to each other.

According to various embodiments, the second housing is configured to pivot between a position at which the second housing is folded to face the first housing and a position at which the second housing is unfolded by a predetermined angle with respect to the first housing, and the stopper protrusions of the first cam members are configured to interfere with each other at the position at which the second housing is unfolded by the predetermined angle with respect to the first housing.

According to various embodiments, the hinge module may include a first hinge bracket (e.g., the first hinge bracket 301a in FIG. 6 or FIG. 10) configured to rotatably support one ends of the gear shafts, a pair of rotation brackets (e.g., the rotation brackets 302a and 302b in FIG. 6 or FIG. 9) pivotably mounted on the first hinge bracket, and a slide member (e.g., the slide member 329a or 329b in FIG. 6 or FIG. 9) mounted on a corresponding one of the first housing and the second housing and slidably coupled to the corresponding one of the rotation brackets, wherein each of the rotation brackets may be coupled to the one of the first housing and the second housing in a state of being slidable by the slide member.

According to various embodiments, wherein the corresponding rotation bracket may be configured to pivot about a pivot axis (e.g., the pivot axis P1 or P2 in FIG. 9 or FIG. 14) located in parallel to the rotation axis (e.g., the rotation axis of R1 or R2 in FIG. 9 or FIG. 14) of the corresponding gear shaft at a position spaced apart from the rotation axis of the corresponding gear shaft.

According to various embodiments, the hinge module may further include a second hinge bracket (e.g., the second hinge bracket 301b in FIG. 6) configured to rotatably support the other ends of the gear shafts.

According to various embodiments, the slide member may be configured to linearly move on the one of the rotation brackets and the slide pins may be configured to move along the curved trajectory on the mounting member as the second housing pivots with respect to the first housing.

According to various embodiments, the second housing may be configured to pivot between a position at which the second housing is folded to face the first housing and a position at which the second housing is unfolded by a predetermined angle with respect to the first housing, and the flexible display may be configured to at least partially visually exposed at a position at which the second housing is folded to fact the first housing.

According to various embodiments disclosed herein, an electronic device (e.g., the electronic device 100 or 200 of FIGS. 1 to 5) may include a first housing (e.g., the first housing 101 or 201 in FIGS. 1 to 3), a second housing (e.g., the second housing 102 or 202 in FIGS. 1 to 3) connected to the first housing and configured to pivot between a position at which the second housing is folded to face the first housing and a position at which the second housing is unfolded by a predetermined angle with respect to the first housing, a hinge module (e.g., the hinge module 204 or 300 in FIG. 3 or FIG. 6) configured to rotatably couple the first housing and the second housing to each other, and a flexible display (e.g., the flexible display 102 or 203 in FIGS. 1 to 3) disposed to extend from one surface of the first housing to one surface of the second housing across an area in which the hinge module is disposed, wherein the hinge module may include a pair of gear shafts (e.g., the gear shafts 303a and 303b in FIG. 6) engaged with each other to rotate in opposite directions with respect to each other, a hinge arm (e.g., the first hinge arm 304a and the second hinge arm 304b in FIG. 6 or FIG. 9) which is mounted on a corresponding one of the gear shafts and pivots about a rotation axis (e.g., the rotation axis R1 or R2 in FIG. 9 or FIG. 21) of the corresponding gear shaft, a mounting member (e.g., the first mounting member 305a and the second mounting member 305b in FIG. 6 or FIG. 9) which is mounted on a corresponding one of the first housing and the second housing, a plurality of slide pins (e.g., the slide pins 349a and 349b in FIG. 6 or FIG. 9) coupled to the hinge arm and slidably coupled to the mounting member, a first hinge bracket (e.g., the first hinge bracket 301a in FIG. 6 or FIG. 10) configured to rotatably support one ends of the gear shafts, a pair of rotation brackets (e.g., the first rotation bracket 302a and the second rotation bracket 302b in FIG. 6 or FIG. 9) pivotably mounted on the first hinge bracket, and a slide member (e.g., the first slide member 329a and the second slide member 329b in FIG. 6 or FIG. 9) mounted on a corresponding one of the first housing and the second housing and slidably coupled to a corresponding of the rotation brackets, wherein the slide member may be configured to linearly move on the corresponding rotation bracket and the slide pins may be configured to move along a curved trajectory on the mounting member as the second housing pivots.

According to various embodiments, the slide pins may be mounted to the hinge arm with a distance (e.g., the distance I in FIG. 9) therebetween greater than the distance in which one of the slide pins moves on the mounting member (e.g., the movement range M in FIG. 9).

According to various embodiments, the slide member may slide on the rotation bracket in a direction perpendicular to the rotation axis of the one of the gear shafts.

According to various embodiments, the hinge module may further include stopper protrusions (e.g., the stopper protrusions 347 of FIG. 15 or 25) provided on the hinge arms, and at least some of the stopper protrusions are configured to interfere with each other at the position at which the second housing is unfolded by the predetermined angle with respect to the first housing.

In the foregoing detailed description, specific embodiments have been described, but it will be evident to a person ordinarily skilled in the art that various modifications can be made without departing from the scope of the disclosure.

## Claims

1. An electronic device (100, 200) comprising:
a first housing (101, 201);
a second housing (102, 202) pivotably connected to the first housing (101, 201);
a hinge module (204, 300) configured to pivotably couple the first housing (101, 201) and the second housing (102, 202) to each other; and
a flexible display (103, 203) disposed from one surface of the first housing (101, 201) to one surface of the second housing (102, 202) across an area in which the hinge module (204, 300) is disposed,
wherein the hinge module (204, 300) comprises:
a pair of gear shafts (303a, 303b) engaged with each other to rotate in opposite directions with respect to each other;
a first hinge arm (304a) and a second hinge arm (304b), each hinge arm (304a, 304b) mounted on a corresponding one of the gear shafts (303a, 303b) to rotate about a rotation axis (R1, R2) of the corresponding gear shaft (303a, 303b);
a first mounting member (305a) and a second mounting member (305b), each mounting member (305a, 305b) mounted on a corresponding one of the first housing (101, 201) and the second housing (102, 202); and
a plurality of slide pins (349a, 349b) coupled to the first hinge arm (304a) and slidably coupled to the first mounting member (305a), and/or a plurality of slide pins (349a, 349b) coupled to the second hinge arm (304b) and slidably coupled to the second mounting member (305b); and
wherein, among the slide pins (349a, 349b), a first pin (349a) is located at a first distance (D1) from the rotation axis (R1, R2) of the corresponding gear shaft (303a, 303b), and a second pin (349b) is located at a second distance (D2) different from the first distance from the rotation axis (R1, R2) of the corresponding gear shaft (303a, 303b), and
wherein the first pin (349a) and the second pin (349b) are coupled to the same side of one of the first mounting member (305a) or the second mounting member (305b),
**characterised in that**
a distance (I) between the first pin (349a) and the second pin (349b) is set to be greater than a distance (M) by which the first pin (349a) or the second pin (349b) moves on the mounting member (305a, 305b).

2. The electronic device (100, 200) of claim 1, wherein the mounting member (305a, 305b) comprises:
at least one first slide groove (353a) configured to slidably accommodate the first pin (349a); and
at least one second slide groove (353b) configured to slidably accommodate the second pin (349b).

3. The electronic device (100, 200) of claim 2, wherein at least one of the first slide groove (353a) and the second slide groove (353b) extends along a curved trajectory.

4. The electronic device (100, 200) of claim 2, wherein the at least one mounting member (305a, 305b) further comprises a slot (351) configured to accommodate a portion of the hinge arm (304a, 304b), and
the first slide groove (353a) is provided on each of opposite sides of the slot (351).

5. The electronic device (100, 200) of any one of the preceding claims, wherein the hinge module (204, 300) further comprises:
at least one first cam member (343a) provided at one end of one of the hinge arms (304a, 304b) and mounted to surround the corresponding gear shaft (303a, 303b); and
at least one second cam member (361) comprising rotation holes (365c) configured to rotatably accommodate the gear shafts (303a, 303b), respectively, and coupled to the gear shafts (303a, 303b) in a state of facing the first cam member (343a), and
wherein the first cam member (343a) is configured to be in slide contact with the second cam member (361) while rotating together with the corresponding gear shaft (303a, 303b).

6. The electronic device (100, 200) of claim 5, wherein the hinge module (204, 300) further comprises at least one elastic member (363) disposed to surround the corresponding gear shaft (303a, 303b), and
the elastic member (363) is configured to provide an elastic force that brings the second cam member (361) into close contact with the first cam member (343a).

7. The electronic device (100, 200) of claim 5, wherein a pair of second cam members are disposed to respectively face opposite surfaces of one first cam member.

8. The electronic device (100, 200) of claim 5, wherein the hinge module (204, 300) further comprises:
first peak portions (345a) and first valley portions (345b) provided on one surface of the first cam member (343a) and alternately arranged along a rotation direction of the first cam member (343a); and
second peak portions (365a) and second valley portions (365b) provided on one surface of the second cam member (361) and alternately arranged along the rotational direction of the first cam member (343a), and
wherein the first peak portions (345a) are configured to be selectively engaged with the second valley portions (365b) when the first cam member (343a) rotates.

9. The electronic device (100, 200) of claim 5, wherein the hinge module (204, 300) further comprises a stopper protrusion (347) provided on an outer peripheral surface of the first cam member (343a), and
the first cam member (343a) mounted on one of the gear shafts (303a, 303b) and another first cam member (343a) mounted on another one of the gear shafts (303a, 303b) are disposed adjacent to each other.

10. The electronic device (100, 200) of claim 9, wherein the second housing (102, 202) is configured to pivot between a position at which the second housing (102, 202) is folded to face the first housing (101, 201) and a position at which the second housing (102, 202) is unfolded by a predetermined angle with respect to the first housing (101, 201), and
the stopper protrusions (347) of the first cam members (343a) are configured to interfere with each other at the position at which the second housing (102, 202) is unfolded by the predetermined angle with respect to the first housing (101, 201).

11. The electronic device (100, 200) of any one of the preceding claims, wherein the hinge module (204, 300) further comprises:
a first hinge bracket (301a) configured to rotatably support one ends of the gear shafts (303a, 303b);
a pair of rotation brackets (302a, 302b) pivotably mounted to the first hinge bracket (301a); and
a slide member (329a, 329b) mounted on a corresponding one of the first housing (101, 201) and the second housing (102, 202), and slidably coupled to a corresponding a corresponding one of the rotation brackets (302a, 302b), and
wherein the corresponding rotation bracket (302a, 302b) is coupled to one of the first housing (101, 201) and the second housing (102, 202) in a state of being slidable by the slide member (329a, 329b).

12. The electronic device (100, 200) of claim 11, wherein the corresponding rotation bracket (302a, 302b) is configured to rotate about a pivot axis (P1, P2) located at a position spaced apart from the rotation axis (R1, R2) of the corresponding gear shaft (303a, 303b) in parallel to the rotation axis (R1, R2) of the corresponding gear shaft (303a, 303b).

13. The electronic device (100, 200) of claim 11, wherein the hinge module (204, 300) further comprises a second hinge bracket (301b) configured to rotatably support other ends of the gear shafts (303a, 303b).

14. The electronic device (100, 200) of claim 11, wherein the slide member (329a, 329b) is configured to linearly move on the corresponding rotation bracket (302a, 302b) and the slide pins (349a, 349b) are configured to move along a curved trajectory on the mounting member (305a, 305b) as the second housing pivots (102, 202) with respect to the first housing (101, 201).

## Patentansprüche

1. Elektronische Vorrichtung (100, 200), umfassend:
ein erstes Gehäuse (101, 201);
ein zweites Gehäuse (102, 202), das schwenkbar mit dem ersten Gehäuse (101, 201) verbunden ist;
ein Scharniermodul (204, 300), das konfiguriert ist, um das erste Gehäuse (101, 201) und das zweite Gehäuse (102, 202) schwenkbar miteinander zu koppeln; und
eine flexible Anzeige (103, 203), die von einer Oberfläche des ersten Gehäuses (101, 201) zu einer Oberfläche des zweiten Gehäuses (102, 202) über einen Bereich angeordnet ist, in dem das Scharniermodul (204, 300) angeordnet ist,
wobei das Scharniermodul (204, 300) Folgendes umfasst:
ein Paar Getriebewellen (303a, 303b), die miteinander in Eingriff stehen, um sich in entgegengesetzten Richtungen zueinander zu drehen;
einen ersten Scharnierarm (304a) und einen zweiten Scharnierarm (304b), wobei jeder Scharnierarm (304a, 304b) auf einer entsprechenden der Getriebewellen (303a, 303b) montiert ist, um sich um eine Drehachse (R1, R2) der entsprechenden Getriebewelle (303a, 303b) zu drehen;
ein erstes Montageelement (305a) und ein zweites Montageelement (305b), wobei jedes Montageelement (305a, 305b) auf einem entsprechenden des ersten Gehäuses (101, 201) und des zweiten Gehäuses (102, 202) montiert ist; und
eine Vielzahl von Gleitstiften (349a, 349b), die mit dem ersten Scharnierarm (304a) gekoppelt sind und verschiebbar mit dem ersten Montageelement (305a) gekoppelt sind, und/oder eine Vielzahl von Gleitstiften (349a, 349b), die mit dem zweiten Scharnierarm (304b) gekoppelt sind und verschiebbar mit dem zweiten Montageelement (305b) gekoppelt sind; und
wobei von den Gleitstiften (349a, 349b) ein erster Stift (349a) in einem ersten Abstand (D1) von der Drehachse (R1, R2) der entsprechenden Getriebewelle (303a, 303b) angeordnet ist und ein zweiter Stift (349b) in einem zweiten Abstand (D2) angeordnet ist, der sich von dem ersten Abstand von der Drehachse (R1, R2) der entsprechenden Getriebewelle (303a, 303b) unterscheidet, und
wobei der erste Stift (349a) und der zweite Stift (349b) mit der gleichen Seite eines des ersten Montageelements (305a) oder des zweiten Montageelements (305b) gekoppelt sind,
**dadurch gekennzeichnet, dass** ein Abstand (I) zwischen dem ersten Stift (349a) und dem zweiten Stift (349b) so eingestellt ist, dass er größer ist als ein Abstand (M), um den sich der erste Stift (349a) oder der zweite Stift (349b) auf dem Montageelement (305a, 305b) bewegt.

2. Elektronische Vorrichtung (100, 200) nach Anspruch 1, wobei das Montageelement (305a, 305b) umfasst:
mindestens eine erste Gleitnut (353a), die so konfiguriert ist, dass sie den ersten Stift (349a) gleitend aufnimmt; und
mindestens eine zweite Gleitnut (353b), die so konfiguriert ist, dass sie den zweiten Stift (349b) gleitend aufnimmt.

3. Elektronische Vorrichtung (100, 200) nach Anspruch 2, wobei mindestens eine der ersten Gleitnut (353a) und der zweiten Gleitnut (353b) sich entlang einer gekrümmten Bahn erstreckt.

4. Elektronische Vorrichtung (100, 200) nach Anspruch 2, wobei das mindestens eine Montageelement (305a, 305b) ferner einen Schlitz (351) umfasst, der so konfiguriert ist, dass er einen Abschnitt des Scharnierarms (304a, 304b) aufnimmt, und
die erste Gleitnut (353a) auf jeder von gegenüberliegenden Seiten des Schlitzes (351) vorgesehen ist.

5. Elektronische Vorrichtung (100, 200) nach einem der vorhergehenden Ansprüche, wobei das Scharniermodul (204, 300) ferner umfasst:
mindestens ein erstes Nockenelement (343a), das an einem Ende eines der Scharnierarme (304a, 304b) vorgesehen und so angebracht ist, dass es die entsprechende Getriebewelle (303a, 303b) umgibt; und
mindestens ein zweites Nockenelement (361), das Drehlöcher (365c) umfasst, die so konfiguriert sind, dass sie die Getriebewellen (303a, 303b) jeweils drehbar aufnehmen, und das mit den Getriebewellen (303a, 303b) in einem Zustand gekoppelt ist, in dem es dem ersten Nockenelement (343a) zugewandt ist, und
wobei das erste Nockenelement (343a) so konfiguriert ist, dass es in Gleitkontakt mit dem zweiten Nockenelement (361) steht, während es sich zusammen mit der entsprechenden Getriebewelle (303a, 303b) dreht.

6. Elektronische Vorrichtung (100, 200) nach Anspruch 5, wobei das Scharniermodul (204, 300) ferner mindestens ein elastisches Element (363) umfasst, das so angeordnet ist, dass es die entsprechende Getriebewelle (303a, 303b) umgibt, und
das elastische Element (363) konfiguriert ist, um eine elastische Kraft bereitzustellen, die das zweite Nockenelement (361) in engen Kontakt mit dem ersten Nockenelement (343a) bringt.

7. Elektronische Vorrichtung (100, 200) nach Anspruch 5, wobei ein Paar zweiter Nockenelemente so angeordnet ist, dass sie jeweils gegenüberliegenden Oberflächen eines ersten Nockenelements zugewandt sind.

8. Elektronische Vorrichtung (100, 200) nach Anspruch 5, wobei das Scharniermodul (204, 300) ferner umfasst:
erste Spitzenabschnitte (345a) und erste Talabschnitte (345b), die auf einer Oberfläche des ersten Nockenelements (343a) vorgesehen und abwechselnd entlang einer Drehrichtung des ersten Nockenelements (343a) angeordnet sind; und
zweite Spitzenabschnitte (365a) und zweite Talabschnitte (365b), die auf einer Oberfläche des zweiten Nockenelements (361) vorgesehen und abwechselnd entlang der Drehrichtung des ersten Nockenelements (343a) angeordnet sind, und
wobei die ersten Spitzenabschnitte (345a) konfiguriert sind, um selektiv mit den zweiten Talabschnitten (365b) in Eingriff zu kommen, wenn sich das erste Nockenelement (343a) dreht.

9. Elektronische Vorrichtung (100, 200) nach Anspruch 5, wobei das Scharniermodul (204, 300) ferner einen Stoppervorsprung (347) umfasst, der an einer äußeren Umfangsfläche des ersten Nockenelements (343a) vorgesehen ist, und
das erste Nockenelement (343a), das auf einer der Getriebewellen (303a, 303b) montiert ist, und ein weiteres erstes Nockenelement (343a), das auf einer anderen der Getriebewellen (303a, 303b) montiert ist, benachbart zueinander angeordnet sind.

10. Elektronische Vorrichtung (100, 200) nach Anspruch 9, wobei das zweite Gehäuse (102, 202) so konfiguriert ist, dass es zwischen einer Position, in der das zweite Gehäuse (102, 202) so gefaltet ist, dass es dem ersten Gehäuse (101, 201) zugewandt ist, und einer Position, in der das zweite Gehäuse (102, 202) um einen vorbestimmten Winkel in Bezug auf das erste Gehäuse (101, 201) entfaltet ist, schwenkt, und
die Stoppervorsprünge (347) der ersten Nockenelemente (343a) so konfiguriert sind, dass sie in der Position, in der das zweite Gehäuse (102, 202) um den vorbestimmten Winkel in Bezug auf das erste Gehäuse (101, 201) entfaltet ist, ineinander eingreifen.

11. Elektronische Vorrichtung (100, 200) nach einem der vorhergehenden Ansprüche, wobei das Scharniermodul (204, 300) ferner umfasst:
einen ersten Scharnierbügel (301a), der so konfiguriert ist, dass er ein Ende der Getriebewellen (303a, 303b) drehbar stützt;
ein Paar Drehbügel (302a, 302b), die schwenkbar am ersten Scharnierbügel (301a) angebracht sind; und
ein Gleitelement (329a, 329b), das an einem entsprechenden des ersten Gehäuses (101, 201) und des zweiten Gehäuses (102, 202) angebracht und gleitend mit einer entsprechenden der Drehbügel (302a, 302b) gekoppelt ist, und
wobei der entsprechende Drehbügel (302a, 302b) mit einem des ersten Gehäuses (101, 201) und des zweiten Gehäuses (102, 202) in einem Zustand, in dem er durch das Gleitelement (329a, 329b) verschiebbar ist, gekoppelt ist.

12. Elektronische Vorrichtung (100, 200) nach Anspruch 11, wobei der entsprechende Drehbügel (302a, 302b) so konfiguriert ist, dass er sich um eine Drehachse (P1, P2) dreht, die sich an einem von der Drehachse (R1, R2) der entsprechenden Getriebewelle (303a, 303b) beabstandeten Standort befindet, der parallel zur Drehachse (R1, R2) der entsprechenden Getriebewelle (303a, 303b) liegt.

13. Elektronische Vorrichtung (100, 200) nach Anspruch 11, wobei das Scharniermodul (204, 300) ferner einen zweiten Scharnierbügel (301b) umfasst, der so konfiguriert ist, dass er die anderen Enden der Getriebewellen (303a, 303b) drehbar stützt.

14. Elektronische Vorrichtung (100, 200) nach Anspruch 11, wobei das Gleitelement (329a, 329b) so konfiguriert ist, dass es sich linear auf dem entsprechenden Drehbügel (302a, 302b) bewegt, und die Gleitstifte (349a, 349b) so konfiguriert sind, dass sie sich entlang einer gekrümmten Bahn auf dem Montageelement (305a, 305b) bewegen, wenn das zweite Gehäuse (102, 202) in Bezug auf das erste Gehäuse (101, 201) schwenkt.

## Revendications

1. Dispositif électronique (100, 200) comprenant :
un premier boîtier (101, 201) ;
un deuxième boîtier (102, 202) relié de manière pivotante au premier boîtier (101, 201) ;
un module de charnière (204, 300) configuré pour coupler de manière pivotante le premier boîtier (101, 201) et le deuxième boîtier (102, 202) l'un à l'autre ; et
un affichage flexible (103, 203) disposé d'une surface du premier boîtier (101, 201) à une surface du deuxième boîtier (102, 202) à travers une zone dans laquelle le module de charnière (204, 300) est disposé,
dans lequel le module de charnière ( 204, 300) comprend :
une paire d'arbres de transmission (303a, 303b) engagés l'un dans l'autre pour tourner dans des directions opposées l'un par rapport à l'autre ;
un premier bras de charnière (304a) et un deuxième bras de charnière (304b), chaque bras de charnière (304a, 304b) étant monté sur un arbre de transmission correspondant des arbres de transmission (303a, 303b) pour tourner autour d'un axe de rotation (R1, R2) de l'arbre de transmission correspondant (303a, 303b) ;
un premier élément de montage (305a) et un deuxième élément de montage (305b), chaque élément de montage (305a, 305b) étant monté sur un boîtier correspondant du premier boîtier (101, 201) et du deuxième boîtier (102, 202) ; et
plusieurs axes de glissement (349a, 349b) couplés au premier bras de charnière (304a) et couplés de manière coulissante au premier élément de montage (305a), et/ou une pluralité d'axes de glissement (349a, 349b) couplés au deuxième bras de charnière (304b) et couplés de manière coulissante au deuxième élément de montage (305b) ; et
dans lequel, parmi les broches (349a, 349b), une première broche (349a) est située à une première distance (D1) de l'axe de rotation (R1, R2) de l'arbre de transmission correspondant (303a, 303b), et une deuxième broche (349b) est située à une deuxième distance (D2) différente de la première distance de l'axe de rotation (R1, R2) de l'arbre de transmission correspondant (303a, 303b), et
dans lequel la première broche (349a) et la deuxième broche (349b) sont couplées au même côté d'un du premier élément de montage (305a) ou du deuxième élément de montage (305b),
**caractérisé en ce qu'**une distance (I) entre la première broche (349a) et la deuxième broche (349b) est fixée de manière à être supérieure à une distance (M) par laquelle la première broche (349a) ou la deuxième broche (349b) se déplace sur l'élément de montage (305a, 305b).

2. Dispositif électronique (100, 200) de la revendication 1, dans lequel l'élément de montage (305a, 305b) comprend :
au moins une première rainure de glissement (353a) configurée pour accueillir de manière coulissante la première broche (349a) ; et
au moins une deuxième rainure de glissement (353b) configurée pour accueillir de manière coulissante la deuxième broche (349b).

3. Dispositif électronique (100, 200) de la revendication 2, dans lequel au moins une de la première rainure de glissement (353a) et la deuxième rainure de glissement (353b) s'étend le long d'une trajectoire incurvée.

4. Dispositif électronique (100, 200) de la revendication 2, dans lequel l'au moins un élément de montage (305a, 305b) comprend en outre une fente (351) configurée pour accueillir une partie du bras de charnière (304a, 304b), et
la première rainure de glissement (353a) est prévue sur chacun de côtés opposés de la fente (351).

5. Dispositif électronique (100, 200) de l'une quelconque des revendications précédentes, dans lequel le module de charnière (204, 300) comprend en outre :
au moins un premier élément de came (343a) prévu à une extrémité de l'un du bras de charnière (304a, 304b) et monté pour entourer l'arbre de transmission correspondant (303a, 303b) ; et
au moins un deuxième élément de came (361) comprenant des trous de rotation (365c) configurés pour accueillir de manière rotative les arbres de transmission (303a, 303b), respectivement, et couplés aux arbres de transmission (303a, 303b) dans un état où ils font face au premier élément de came (343a), et
dans lequel le premier élément de came (343a) est configuré pour être en contact glissant avec le deuxième élément de came (361) tout en tournant avec l'arbre de transmission correspondant (303a, 303b).

6. Dispositif électronique (100, 200) de la revendication 5, dans lequel le module de charnière (204, 300) comprend en outre au moins un élément élastique (363) disposé pour entourer l'arbre de transmission correspondant (303a, 303b), et
l'élément élastique (363) est configuré pour fournir une force élastique qui amène le deuxième élément de came (361) en contact étroit avec le premier élément de came (343a).

7. Dispositif électronique (100, 200) de la revendication 5, dans lequel une paire de deuxièmes éléments de came est disposée pour faire face respectivement à des surfaces opposées d'un premier élément de came.

8. Dispositif électronique (100, 200) de la revendication 5, dans lequel le module de charnière (204, 300) comprend en outre :
des premières parties de crête (345a) et des premières parties de vallée (345b) prévues sur une surface du premier élément de came (343a) et disposées alternativement le long d'une direction de rotation du premier élément de came (343a) ; et
des deuxièmes parties de crête (365a) et des deuxièmes parties de vallée (365b) prévues sur une surface du deuxième élément de came (361) et disposées alternativement le long de la direction de rotation du premier élément de came (343a), et
dans lequel les premières parties de crête (345a) sont configurées pour être sélectivement engagées avec les deuxièmes parties de vallée (365b) lorsque le premier élément de came (343a) tourne.

9. Dispositif électronique (100, 200) de la revendication 5, dans lequel le module de charnière (204, 300) comprend en outre une saillie d'arrêt (347) prévue sur une surface périphérique extérieure du premier élément de came (343a), et
le premier élément de came (343a) monté sur l'un des arbres de transmission (303a, 303b) et un autre premier élément de came (343a) monté sur un autre des arbres de transmission (303a, 303b) sont disposés l'un à côté de l'autre.

10. Dispositif électronique (100, 200) de la revendication 9, dans lequel le deuxième boîtier (102, 202) est configuré pour pivoter entre une position dans laquelle le deuxième boîtier (102, 202) est plié pour faire face au premier boîtier (101, 201) et une position dans laquelle le deuxième boîtier (102, 202) est déplié d'un angle prédéterminé par rapport au premier boîtier (101, 201), et
les saillies d'arrêt (347) des premiers éléments de came (343a) sont configurées pour interférer l'une avec l'autre à la position à laquelle le deuxième boîtier (102, 202) est déplié de l'angle prédéterminé par rapport au premier boîtier (101, 201).

11. Dispositif électronique (100, 200) de l'une quelconque des revendications précédentes, dans lequel le module de charnière (204, 300) comprend en outre :
un premier support de charnière (301a) configuré pour supporter de manière rotative une extrémité des arbres de transmission (303a, 303b) ;
une paire de supports de rotation (302a, 302b) montés pivotants sur le premier support de charnière (301a) ; et
un élément coulissant (329a, 329b) monté sur un boîtier correspondant du premier boîtier (101, 201) et du deuxième boîtier (102, 202), et couplé de manière coulissante à un support de rotation correspondant des supports de rotation (302a, 302b), et
dans lequel le support de rotation (302a, 302b) correspondant est couplé à l'un du premier boîtier (101, 201) et du deuxième boîtier (102, 202) dans un état de glissement par l'élément coulissant (329a, 329b).

12. Dispositif électronique (100, 200) de la revendication 11, dans lequel le support de rotation (302a, 302b) correspondant est configuré pour tourner autour d'un axe de pivotement (P1, P2) situé à une position espacée de l'axe de rotation (R1, R2) de l'arbre de transmission correspondant (303a, 303b) parallèlement à l'axe de rotation (R1, R2) de l'arbre de transmission correspondant (303a, 303b).

13. Dispositif électronique (100, 200) de la revendication 11, dans lequel le module de charnière (204, 300) comprend en outre un deuxième support de charnière (301b) configuré pour supporter de manière rotative des autres extrémités des arbres de transmission (303a, 303b).

14. Dispositif électronique (100, 200) de la revendication 11, dans lequel l'élément coulissant (329a, 329b) est configuré pour se déplacer linéairement sur le support de rotation (302a, 302b) correspondant et les broches coulissantes (349a, 349b) sont configurées pour se déplacer le long d'une trajectoire incurvée sur l'élément de montage (305a, 305b) lorsque le deuxième boîtier pivote (102, 202) par rapport au premier boîtier (101, 201).
